# EUROPÄISCHE PATENTANMELDUNG

(11) **EP 3 872 049 A1**
(43) Veröffentlichungstag der Anmeldung: **01.09.2021**
(21) Anmeldenummer: 20159418.1
(22) Anmeldetag: 25.02.2020
(51) Int. Cl.: C04B 18/16

(54) **PROZESSHILFSMITTEL UND DEREN VERWENDUNG IN EINEM VERFAHREN ZUR GEWINNUNG VON ZUSCHLAGSTOFFEN UND/ODER PULVERFÖRMIGEM MINERALISCHEM MATERIAL**

(71) Anmelder: Sika Technology AG, 6340 Baar (CH)
(72) Erfinder: Eberhardt, Arnd, 8400 Winterthur (CH); Juilland, Patrick, 3005 Bern (CH); Pegado, Luis, 5200 Brugg (CH); Gallucci, Emmanuel, 8048 Zürich (CH); Frunz, Lukas, 8305 Dietlikon (CH)
(74) Vertreter: Sika Patent Attorneys

(57) **Zusammenfassung**

Verwendung von Prozesshilfsmitteln ausgewählt aus der Gruppe bestehend aus Polycarboxylatethern und/oder -estern (**PCE**), Glykolen, organischen Aminen, insbesondere Alkanolaminen, Ammoniumsalzen von organischen Aminen mit Carbonsäuren, Tensiden, insbesondere nicht-ionischen Tensiden, Gemini-Tensiden, Calciumstearat, alkoxylierten Phosphonsäure- oder Phosphorsäureestern, 1,3-Propandiol, Carbonsäuren, sulphonierten Aminoalkoholen, Borsäure, Salze der Borsäure, Borax, Salze der Phosphorsäure, Glukonat, Eisensulphat, Zinnsulphat, Antimonsalzen, Alkalisalzen, Erdalkalisalzen, Ligninsulphonaten, Glyzerin, Melamin, Melaminsulphonaten, wasserabsorbierenden Mitteln in Form eines Superabsorberpolymers oder in Form eines Schichtsilikats, Antibackmitteln, Zuckern, Zuckersäuren, Zuckeralkoholen, Phosphaten, Phosphonaten, sowie deren Mischungen,
in einem Verfahren zur Gewinnung von Zuschlagstoffen und/oder pulverförmigem mineralischem Material aus einem Ausgangsmaterial, das gehärtetes mineralisches Bindemittel und Zuschlagstoffe enthält.

## Beschreibung

### Technisches Gebiet

Die vorliegende Erfindung bezieht sich auf die Verwendung von Prozesshilfsmitteln in einem Verfahren zur Gewinnung von Zuschlagstoffen und/oder pulverförmigem mineralischem Material aus einem Ausgangsmaterial, das gehärtetes mineralisches Bindemittel und Zuschlagstoffe enthält und welches insbesondere aus Abbruchtrümmern oder Bauschutt besteht.

### Hintergrund

Bislang wird eine große Menge an Abbruchtrümmern oder Bauschuttmaterial, wie z.B. ausgehärteter Beton oder Mörtel, auf Deponien entsorgt. Nur kleinere Mengen werden teilweise als Rohstoff für Low-Tech-Anwendungen in der Bauindustrie wiederverwendet.

Die derzeitige Praxis ist zudem, dass Abbruchtrümmer, z.B. Beton, zerkleinert werden und nur die groben Fraktionen wiederverwendet werden, während die feineren Fraktionen bei Wiederverwendung die Eigenschaften von Frisch- und Festbeton beeinträchtigen können und daher verworfen werden. Daher kann die derzeitige Praxis nur als unvollständig betrachtet werden.

Abbruchtrümmern oder Bauschuttmaterial enthalten jedoch in der Regel erhebliche Mengen an nützlichen Bestandteilen, z.B. Zuschlagstoffe oder Bindemittelbestandteile, die im Prinzip vollständig recycelt und für neue Bauwerke wiederverwendet werden können. Darüber hinaus ist die Entsorgung von Abfällen in bestimmten Regionen und Ländern aufgrund neuer Gesetze in den letzten Jahren immer teurer und schwieriger geworden. In Europa zum Beispiel schreibt die europäische Richtlinie 2009/98/CE bis zum Jahr 2020 eine Wiederverwendung von mindestens 70 Gew.-% des inerten Abbruchabfalls vor. Somit wird das Recycling von Abbruchtrümmern oder Bauschuttmaterial in naher Zukunft ein wichtiges Thema.

EP 2 978 724 beschreibt ein Verfahren zur Gewinnung von Zuschlagstoffen und/oder pulverförmigen mineralischen Materialien aus Abbruchtrümmern oder Bauschuttmaterial. Die Methode umfasst die Schritte Karbonatisierung und Zerkleinerung. In diesem Verfahren können jedoch Probleme auftreten, welche mit der Agglomeration von Partikeln oder dem Anbacken des Materials und damit der Verstopfung von Maschinen zusammenhängen. Darüber hinaus kann der Materialdurchsatz bei einem solchen Verfahren und damit auch der Ausstoß von aggregiertem und/oder pulverförmigem mineralischen Material verlangsamt werden. Schließlich sind die durch ein solches Verfahren gewonnenen Zuschlagstoffe und Mineralpulver nicht optimal angepasst und können für den Einsatz in hydraulisch abbindenden Zusammensetzungen weiter verbessert werden.

Es besteht daher die Notwendigkeit, geeignete Prozesshilfsmittel für die Verfahren zur Gewinnung von Zuschlagstoffen und/oder pulverförmigen mineralischen Materialien aus Abbruchtrümmern oder Bauschuttmaterial bereitzustellen. Insbesondere um die Gesamteffizienz dieser Verfahren zu erhöhen. Es besteht auch die Notwendigkeit, geeignete Prozesshilfsmittel zur Verfügung zu stellen, die bei Verfahren zur Gewinnung von Zuschlagstoffen und/oder pulverförmigem mineralischem Material aus Abbruch- oder Bauschutt verwendet werden können, um die Eigenschaften der resultierenden Materialien zu verbessern, insbesondere im Zusammenhang mit ihrer Verwendung in hydraulisch abbindenden Zusammensetzungen.

### Zusammenfassung der Erfindung

Aufgabe der vorliegenden Erfindung ist die Bereitstellung von Prozesshilfsmitteln zur Verwendung bei Verfahren zur Gewinnung von Zuschlagstoffen und/oder pulverförmigen mineralischen Materialien aus Abbruchtrümmern oder Bauschuttmaterial, um die Gesamteffizienz dieser Verfahren zu erhöhen. Aufgabe der vorliegenden Erfindung ist auch die Bereitstellung geeigneter Prozesshilfsmittel zur Verwendung bei Verfahren zur Gewinnung von Zuschlagstoffen und/oder pulverförmigen mineralischen Materialien aus Abbruchtrümmern oder Bauschuttmaterial, die die Eigenschaften der resultierenden Materialien verbessern können, insbesondere im Zusammenhang mit ihrer Verwendung in hydraulisch abbindenden Zusammensetzungen.

Überraschenderweise wurde festgestellt, dass die Verwendung geeigneter Prozesshilfsmittel, wie in den Ansprüchen beschrieben, die Aufgaben lösen kann. Insbesondere kann durch die Verwendung geeigneter Prozesshilfsmittel der benötigte Energieeintrag während des erfindungsgemässen Verfahrens verringert werden. Ausserdem kann der Zertrümmerungsprozess verkürzt werden. Es ist auch möglich, den Durchsatz in einem erfindungsgemässen Verfahren zu erhöhen. Weiterhin können die Feinheit und die Partikelgrössenverteilung der erhaltenen Zuschlagstoffe und/oder pulverförmigen mineralischen Materialien optimiert werden.

Ein weiterer Vorteil ist, dass die Verwendung geeigneter Prozesshilfsmittel eine Regulierung der Prozessfeuchte ermöglicht.

Ein besonderer Vorteil ist die Vermeidung oder beträchtliche Verringerung von unerwünschten Agglomerationen von Partikeln während eines erfindungsgemässen Verfahrens. Dadurch wird insbesondere eine Verbackung oder Verpelzung von Partikeln verhindert.

Durch die Verwendung geeigneter Prozesshilfsmittel wird weiterhin eine zusätzliche Funktionalität in die Zuschlagstoffen und/oder pulverförmigen mineralischen Materialien des erfindungsgemässen Verfahrens eingebracht, welche bei nachträglicher Verwendung in hydraulischen Zusammensetzungen, insbesondere in zementgebundenen Baustoffen, vorteilhaft ist. So ist es etwa möglich, die Fliessfähigkeit, die Abbindezeiten, die Festigkeitsentwicklung sowie die Oberflächeneigenschaften von resultierenden hydraulischen Zusammensetzungen zu verbessern.

Weitere Aspekte der Erfindung sind Gegenstand weiterer unabhängiger Ansprüche. Besonders bevorzugte Ausführungsformen werden in der Beschreibung und den abhängigen Ansprüchen dargestellt.

### Wege zur Ausführung der Erfindung

Ein Verfahren zur Gewinnung von Zuschlagstoffen und/oder pulverförmigem mineralischem Material aus einem Ausgangsmaterial, das gehärtetes mineralisches Bindemittel und Zuschlagstoffe umfasst, umfasst die folgenden Schritte:
a) Behandlung des Ausgangsmaterials in einem Zertrümmerungsvorgang, insbesondere unter abrasiven Bedingungen, wobei das gehärtete mineralische Bindemittel zumindest teilweise, insbesondere im Wesentlichen vollständig, karbonatisiert und von der Oberfläche der Aggregate entfernt wird, so dass ein pulverförmiges Zertrümmerungsprodukt entsteht;
b) Abtrennen des behandelten Ausgangsmaterials bei einer vordefinierten Grenzkorngröße, um behandelte Zuschlagstoffe mit einer Korngröße von mindestens der vordefinierten Grenzkorngröße zu gewinnen und/oder um pulverförmiges mineralisches Material mit einer Korngröße unterhalb der vordefinierten Grenzkorngröße zu gewinnen.

Im vorliegenden Kontext steht der Begriff "Ausgangsmaterial" für jedes Material, das gehärtete mineralische Bindemittel und Zuschlagstoffe enthält oder aus diesen besteht. Insbesondere besteht das Ausgangsmaterial aus Abbruchtrümmern oder Bauschuttmaterial, das von abgebrochenen Konstruktionen oder Gebäuden stammt. Das Ausgangsmaterial kann aus Abbrucharbeiten und/oder aus Deponien stammen. Neben dem gehärteten mineralischen Bindemittel und den Zuschlagstoffen können weitere Materialien im Ausgangsmaterial enthalten sein, z.B. Metalle, Kunststoffe und/oder Holz. Es könnte jedoch von Vorteil sein, solche Materialien vor der Behandlung des Ausgangsmaterials zumindest teilweise zu trennen. Vorzugsweise umfasst das Ausgangsmaterial gehärteten Mörtel und/oder Beton oder besteht aus diesen.

Insbesondere umfasst das zu behandelnde Ausgangsmaterial gehärtetes mineralisches Bindemittel, das an die Oberfläche der Zuschlagstoffe gebunden ist, oder besteht aus diesem. Insbesondere umschließt das gehärtete mineralische Bindemittel die Zuschlagstoffe zumindest teilweise und/oder bindet mehrere Einzelaggregate zusammen.

In einer bevorzugten Ausführungsform wird das Ausgangsmaterial vor dem Zertrümmerungsprozess oder Schritt a) zerkleinert. Dadurch wird die Oberfläche des Ausgangsmaterials vergrößert, was wiederum den Zertrümmerungsprozess verbessert.

Der Ausdruck "gehärtetes mineralisches Bindemittel" bezieht sich insbesondere auf ein mineralisches Bindemittel, das in einer chemischen Hydratationsreaktion gehärtet wurde, bei der Hydrate entstanden sind. Vorzugsweise ist das gehärtete mineralische Bindemittel mindestens 2 Tage, vorzugsweise mindestens 7 Tage, insbesondere mindestens 28 oder mindestens 60 Tage ausgehärtet.

Insbesondere umfasst oder besteht das gehärtete mineralische Bindemittel aus gehärtetem hydraulischen Bindemittel, z.B. gehärtetem zementartigem Bindemittel. Das gehärtete mineralische Bindemittel kann jedoch auch gehärtete latent-hydraulische und/oder puzzolanische Bindemittelstoffe enthalten oder aus diesen bestehen.

Der Begriff "latent hydraulische und/oder puzzolanische Bindemittel" steht insbesondere für Betonzusatzmittel vom Typ II mit latent hydraulischen und/oder puzzolanischem Charakter nach EN 206-1. Insbesondere umfasst oder besteht das latent-hydraulische oder puzzolanische Bindemittel aus Schlacke, Flugasche, Silicastaub, aktivierten Tonen und/oder natürlichen Puzzolanen.

Insbesondere umfasst oder besteht das gehärtete mineralische Bindemittel zu 5 - 100 Gew.-%, insbesondere 50 - 100 Gew.-%, bevorzugter 65 - 100 Gew.-%, aus gehärtetem hydraulischem Bindemittel.

Insbesondere umfasst oder besteht das gehärtete mineralische Bindemittel zu 5 - 95 Gew.-% aus gehärtetem hydraulischem Bindemittel und zu 95 - 5 Gew.-% aus gehärtetem latent hydraulischem und/oder puzzolanischem Bindemittel. Bevorzugt kann das gehärtete mineralische Bindemittel 30 - 90 Gew.-% gehärtetes hydraulisches Bindemittel und 70 - 10 Gew.-% gehärtetes latent hydraulisches und/oder puzzolanisches Bindemittel enthalten oder daraus bestehen.

Bevorzugte gehärtete mineralische Bindemittel umfassen oder bestehen aus gehärteten Zementen des Typs CEM I, II, III, IV oder V nach der Norm EN 197, insbesondere des Typs CEM I oder II. Es können jedoch auch andere Zementarten enthalten sein.

Insbesondere ist das gehärtete hydraulische Bindemittel gehärteter Zement. Vorzugsweise ist das latent-hydraulische und/oder puzzolanische Bindemittel gehärtete Schlacke und/oder Flugasche. Ein sehr bevorzugtes latent-hydraulisches Bindemittel ist gehärtete Schlacke.

Der Begriff "Gesteinskörnung" umfasst jede Art von Mörtel und/oder Betonzuschlagstoffen. Insbesondere weisen die Gesteinskörnungen eine Dichte von 2.2 - 3 kg/dm3 auf. Zu den Gesteinskörnungen gehören insbesondere Stein, Kies, Sand oder Mischungen daraus. Die Gesteinskörnungen können jedoch leichte Gesteinskörnungen, insbesondere Blähton oder Polystyrol, oder schwere Gesteinskörnungen, wie Baryt, Eisenerz und dergleichen, umfassen oder aus diesen bestehen.

Insbesondere beträgt die Korngröße der Aggregate mindestens 0.125 mm oder mindestens 0.250 mm. Vorzugsweise beträgt die Korngröße der Gesteinskörnungen höchstens 125 mm oder höchstens 32 mm. Insbesondere beträgt die Korngröße der Gesteinskörnungen 0.125 - 125 mm, insbesondere von 0.125 - 32 mm, insbesondere von 0.125 - 16 mm, zum Beispiel von 0.125 - 8 mm oder von 0.125 - 5 mm.

Im vorliegenden Zusammenhang wird die Korngröße durch Siebanalyse bestimmt, insbesondere bei Sieben mit quadratischen Öffnungen. Insbesondere wird die Korngröße durch die Öffnungsgröße der Prüfsiebe ausgedrückt, die die betreffenden Körner oder Partikel gerade noch passieren können.

Der Begriff "Karbonatisierung" steht für einen Prozess, der im Wesentlichen die Umkehrung des chemischen Prozesses der Kalzinierung ist, wie er z.B. in einem Zementofen stattfindet.

Insbesondere bedeutet "Karbonatisierung" den Einbau von Kohlendioxid in chemische Verbindungen oder die chemische Reaktion von Kohlendioxid mit dem Ausgangsmaterial. So steht "Karbonatisierung" insbesondere für eine Kohlendioxidbehandlung des Ausgangsmaterials. Die Karbonatisierung von ausgehärteten mineralischen Bindemitteln, z.B. Mörteln oder Beton, erfolgt in gewissem Umfang auf natürliche Weise. Der Begriff "Karbonatisierung" steht hier jedoch für einen Prozess, bei dem die Karbonatisierung im Vergleich zum natürlichen Prozess gezielt verstärkt oder beschleunigt wird. Dies kann durch die Bereitstellung von überschüssigem Kohlendioxid erreicht werden.

So kann beispielsweise ein gehärtetes mineralisches Bindemittel in Form von hydraulischem Zement, das im Wesentlichen aus Kalzium-, Silikat- und Aluminiumhydraten besteht, mit Kohlendioxid reagieren und entsprechende Karbonate bilden.

Grundsätzlich bestimmt die Mikrostruktur des gehärteten mineralischen Bindemittels bzw. der Bindemittelmatrix die Karbonatisierungsgeschwindigkeit und den Verlauf einer Karbonatisierungsfront von der freiliegenden Oberfläche des zementgebundenen Materials zu dessen Kern.

Das Verfahren der vorliegenden Erfindung zielt auf den vollständigen Zerfall des gehärteten mineralischen Bindemittels durch Karbonatisierung und zusätzlich auf die Entfernung der Karbonatisierungsfront, insbesondere durch Abrieb oder Zertrümmerung. Dadurch kann die neu freigelegte Oberfläche schnell wieder karbonatisieren. Die Behandlung wird kontinuierlich in einem iterativen Prozess durchgeführt, bis ein gewünschter Grad der Entfernung (insbesondere eine im Wesentlichen vollständige Entfernung) des gehärteten mineralischen Bindemittels erreicht ist. Damit wird das ausgehärtete mineralische Bindemittel zusätzlich von der Oberfläche der Zuschlagstoffe entfernt. Insbesondere wird das ausgehärtete mineralische Bindemittel gleichzeitig und/oder kontinuierlich karbonatisiert und von der Oberfläche der Gesteinskörnungen entfernt.

Vorzugsweise wird der Zertrümmerungsprozess oder Schritt a) unter abrasiven Bedingungen durchgeführt. Dies sind Bedingungen, bei denen sich das Ausgangsmaterial und eventuell gebildete Zerfallsprodukte in engem Kontakt gegeneinander bewegen. Dadurch entstehen hohe Scherkräfte und Reibung. Schließlich führen diese Prozesse zu einer effektiven Entfernung von gehärtetem mineralischem Bindemittel und/oder karbonatisiertem Material von der Oberfläche der Aggregate durch mechanischen Abrieb oder Zertrümmerung.

Insbesondere wird in Schritt a) das ausgehärtete mineralische Bindemittel und/oder karbonatisierte Material durch mechanischen Abrieb und/oder Abrieb von der Oberfläche der Gesteinskörnungen entfernt. Der Abtrag erfolgt insbesondere durch mechanische Kraft, die auf das Ausgangsmaterial wirkt. Die mechanische Kraft führt zu hoher Reibung, Schlag und Abrieb bzw. Abrieb des Ausgangsmaterials oder des gehärteten mineralischen Bindemittels und/oder des karbonatisierten Materials.

Die mechanische Kraft und/oder der Abrieb können durch Bewegung des Ausgangsmaterials hervorgerufen werden. Dabei wird das Ausgangsmaterial z.B. in ein definiertes Volumen eingeschlossen und einer Bewegung ausgesetzt. Dadurch werden insbesondere hohe Scherkräfte und Abrieb bzw. Zertrümmerung induziert.

Vorzugsweise beträgt die Dichte von festem Material, insbesondere von Ausgangsmaterial und/oder karbonatisiertem Material, im Verarbeitungsvolumen etwa 10 - 80 Vol.-%, insbesondere 15 - 75 Vol.-%, insbesondere 20 - 70 Vol.-%, bevorzugter 30 - 65 Vol.-% oder 40 - 60 Vol.-%. Der Begriff "Verarbeitungsvolumen" steht für das Volumen, in dem der mechano-chemische Prozess effektiv durchgeführt wird. Mit anderen Worten, das Verarbeitungsvolumen ist definiert als der Raum, in dem das zu behandelnde Material, insbesondere das Ausgangsmaterial, der Karbonatisierung und/oder dem Abrieb und/oder der Zertrümmerung ausgesetzt ist.

Insbesondere füllt das zu verarbeitende Material, insbesondere das Ausgangsmaterial, das Verarbeitungsvolumen entsprechend den oben genannten Dichten aus, so dass bei der Bewegung des Materials abrasive Kontakte zwischen den Partikeln entstehen. Zum Rühren und/oder zur Erzeugung abrasiver Bedingungen können ein Rührwerk, ein mechanischer Mischer, eine rotierende Trommel, ein Brecher, ein Extruder, eine Ultraschallbehandlung, eine Vibration, ein Flüssigkeitsstrom oder Kombinationen davon verwendet werden.

Insbesondere führt das Rühren des Ausgangsmaterials zu Reibung und Abrieb des gehärteten mineralischen Bindemittels und/oder des karbonatisierten Materials. Im Gegenzug wird dadurch die Karbonatisierungsrate erhöht. Insgesamt führt das Rühren und/oder der Abrieb zu einem verbesserten Durchsatz bzw. zu einer höheren Effizienz des gesamten Zertrümmerungsprozesses. Der Zertrümmerungsprozess besteht also aus der Kombination von (i) einem chemischen Prozess, d.h. der Karbonatisierung, die das gehärtete mineralische Bindemittel zersetzt, und (ii) der Entfernung der Zersetzungs- oder Karbonatisierungsprodukte von der Oberfläche der Aggregate. Diese beiden Prozesse wirken synergetisch zusammen und beschleunigen den gesamten Zertrümmerungsprozess erheblich.

Insbesondere laufen diese beiden Prozesse gleichzeitig und iterativ ab, bis ein gewünschter Zertrümmerungsgrad erreicht ist oder bis im Wesentlichen saubere Aggregate erhalten werden.

Konkret wird durch die Entfernung der Zersetzungs- oder Karbonatisierungsprodukte von der Oberfläche der Zuschlagstoffe das in den unteren Schichten vorhandene, nicht umgesetzte, gehärtete mineralische Bindemittel schrittweise freigelegt und im Karbonatisierungsprozess chemisch umgesetzt. Dieses Zusammenspiel zwischen chemischem und mechanischem Prozess ist insbesondere sehr effektiv und führt zu sehr sauberen Aggregaten.

Durch den Zerfallsprozess liegen die Zerfallsprodukte als feinkörnige oder pulverförmige Produkte vor, deren Korngrößen von Nanometern bis zu mehreren Mikrometern reichen. Typischerweise liegt die Korngröße des pulverförmigen Zerkleinerungsproduktes im Bereich von 0 - 0.250 mm oder 0 - 0.125 mm. Diese Tatsache hat mehrere Vorteile. Erstens erleichtert dies die Trennung der Zerfallsprodukte von den gereinigten Aggregaten. Zweitens bedeutet dies, dass die feinkörnigen Zerkleinerungsprodukte z.B. als Füllstoff für verschiedene industrielle Anwendungen oder als Ausgangsmaterial für zementähnliche Materialien verwendet werden können, ohne dass eine weitere mechanische Behandlung wie z.B. Mahlen erforderlich ist.

Diese Methode, die als kombinierter chemisch-mechanischer Prozess angesehen werden kann, umfasst eine hohe Effizienz sowohl für die Zerfallsgeschwindigkeit als auch für die Trennung von sauberen Zuschlagstoffen und aufgelösten, gehärteten mineralischen Bindemitteln.

Insbesondere die Behandlung des Ausgangsmaterials erfolgt in Gegenwart von Wasser. Das Wasser kann z.B. in Form eines Gases und/oder einer Flüssigkeit vorhanden sein.

Die Behandlung des Ausgangsmaterials findet vorzugsweise in einer Flüssigkeit, insbesondere in einer wässrigen Flüssigkeit, vorzugsweise in Wasser, statt. Dies bedeutet, dass das Ausgangsmaterial zumindest teilweise, insbesondere vollständig, in die Flüssigkeit eingetaucht ist.

Es ist jedoch auch möglich, die Behandlung mit benetztem Ausgangsmaterial und/oder unter feuchten Bedingungen durchzuführen. Unter feuchten Bedingungen versteht man insbesondere eine relative Luftfeuchtigkeit von 40 - 100%.

Die Karbonatisierung erfolgt insbesondere durch eine Kohlendioxidbehandlung des Ausgangsmaterials. Das Kohlendioxid kann ein Produkt oder ein Nebenprodukt eines beliebigen industriellen Prozesses sein. Bevorzugt wird im Wesentlichen reines Kohlendioxid verwendet. Die Reinheit des Kohlendioxids beträgt vorzugsweise > 1 Gew.-%, z.B. > 8 Gew.-%, vorzugsweise > 50 Gew.-%, insbesondere > 95 Gew.-%, insbesondere > 99 Gew.-%. Im Hinblick auf die Effizienz der Behandlung ist im Wesentlichen reines Kohlendioxid am günstigsten.

Es können aber auch Mischungen von Kohlendioxid mit anderen Stoffen wie Wasserdampf, Stickstoff und dergleichen, z.B. Luft, verwendet werden. Solche Mischungen umfassen insbesondere CO2 in einer Menge > 1 Gew.-%, z.B. > 8 Gew.-%, vorzugsweise > 10 Gew.-%, besonders bevorzugt > 50 Gew.-%, insbesondere > 95 Gew.-%, insbesondere > 99 Gew.-%. Die verwendete CO2-Konzentration liegt insbesondere über der CO2-Konzentration von normaler Luft.

Je nach bevorzugter Ausführungsform können Abgase aus einem industriellen Prozess und/oder ein Gemisch aus Kohlendioxid mit anderen Stoffen zur Karbonatisierung verwendet werden. Vorteilhaft ist, dass das Abgas oder das Gemisch etwa 5 - 25 Gew.-% CO2 enthält, vorzugsweise 8 - 20 Gew.-% CO2 oder 10 - 15 Gew.-% CO2.

Das Kohlendioxid kann in gasförmiger, fester oder flüssiger Form zugegeben werden.

Ebenso kann das verwendete Kohlendioxid aus einer in-situ-Zerlegung von organischen oder anorganischen Stoffen, insbesondere Karbonaten, oder aus der Oxidation von Kohlenmonoxid gewonnen werden. Geeignete Karbonate sind z.B. Karbonatsalze, Alkencarbonate und dergleichen.

Besonders bevorzugt erfolgt die Karbonatisierung des Ausgangsmaterials in einer Flüssigkeit, wobei Kohlendioxid in gasförmiger Form in die Flüssigkeit gegeben wird. Die Flüssigkeit ist dabei insbesondere eine wässrige Flüssigkeit, vorzugsweise Wasser. Dadurch löst sich das Kohlendioxid in der wässrigen Flüssigkeit oder in Wasser.

Vorzugsweise beträgt die Anteil des festen Materials, insbesondere des Ausgangsmaterials und/oder des kohlensäurehaltigen Materials, in der Flüssigkeit, die insbesondere Wasser ist, etwa 10 - 80 Vol.-%, insbesondere 15 - 75 Vol.-%, insbesondere 20 - 70 Vol.-%, bevorzugter 30 - 65 Vol.-% oder 40 - 60 Vol.-%. Wird das Ausgangsmaterial unter solchen Bedingungen einer mechanischen Kraft ausgesetzt, wird ein wirksamer Abrieb oder Zertrümmerung des gehärteten mineralischen Bindemittels und/oder des karbonatisierten Materials induziert. Mit anderen Worten, solche Konzentrationen führen zu stark abrasiven Bedingungen.

Im Gegensatz dazu ist bei Anteilen unter 10 Vol.-% des Feststoffs in der Flüssigkeit die mechanische Kraft oder der Abrieb im Allgemeinen viel weniger effektiv und die Entfernung des ausgehärteten mineralischen Bindemittels und/oder des karbonatisierten Materials von der Oberfläche der Aggregate wird schwierig oder sogar unmöglich. Dies ist insbesondere darauf zurückzuführen, dass unter diesen Bedingungen der Feststoff in der Flüssigkeit ziemlich weit entfernt von der Oberfläche der Aggregate abgeschieden wird. Folglich entsteht meist kaum ein mechanischer Kontakt zwischen den Feststoffpartikeln.

Insbesondere wird das Kohlendioxid in gasförmiger Form in die Flüssigkeit gegeben, so dass sich Blasen bilden. Die Blasen helfen, die Karbonatisierungs- oder Zerfallsprodukte von der Oberfläche der Aggregate zu entfernen.

Die Behandlung des Ausgangsmaterials mit Kohlendioxid erfolgt vorteilhaft bei atmosphärischem Druck. Es sind aber auch niedrigere oder höhere Drücke möglich.

Die für die Behandlung erforderliche Kohlendioxidmenge hängt vom Anteil des gehärteten Bindemittels im Ausgangsmaterial ab. Je mehr gehärtetes Bindemittel, desto mehr Kohlendioxid ist erforderlich.

Insbesondere findet die Behandlung bei einer Temperatur zwischen -10 - 100°C statt, insbesondere zwischen -5 - 75°C oder 5 - 40°C. Die Behandlung kann jedoch z.B. unter feuchten Bedingungen über 100°C erfolgen.

Insbesondere wird die Behandlung des Ausgangsmaterials so lange durchgeführt, wie neue Zertrümmerungs- oder Karbonatisierungsprodukte entstehen. Dies bedeutet insbesondere, dass die Behandlung so lange durchgeführt wird, wie signifikante oder messbare Mengen neuer Zertrümmerungs- oder Karbonatisierungsprodukte gebildet werden.

Insbesondere wird die Behandlung in Schritt a) so lange durchgeführt, bis eine an die Zuschlagstoffe gebundene Menge an gehärtetem mineralischem Bindemittel und karbonatisiertem gehärtetem mineralischem Bindemittel 0.0001 - 50 Gew.-%, insbesondere 0.001 - 25 Gew.-%, insbesondere 0.001 - 10 Gew.-%, vorzugsweise 0.01 - 1 Gew.-%, bezogen auf das Gesamtgewicht der Zuschlagstoffe, beträgt.

Insbesondere wird die Behandlung in Schritt a) so lange durchgeführt, bis eine nach der Norm EN 1097-6 gemessene Porosität der wiedergewonnenen behandelten Gesteinskörnungen ≤ 10 Vol.-%, insbesondere ≤ 5 Vol.-%, insbesondere ≤ 2 Vol.-%, vorzugsweise 0.1 - 3 Vol.-% oder 1 - 3 Vol.-% beträgt.

Insbesondere werden das pulverförmige Mineralmaterial und die behandelten Zuschlagstoffe bei einer charakteristischen Grenzkorngröße getrennt. Vorzugsweise liegt die Trennkorngröße zwischen 0.06 - 1 mm, insbesondere 0.1 - 0.5 mm, vorzugsweise bei 0.125 mm oder bei 0.250 mm. Dies bedeutet, dass Partikel unterhalb der Grenzkorngröße als pulverförmiges Mineralmaterial gesammelt werden, während Partikel mit einer Größe oberhalb der Grenzkorngröße als Aggregate gesammelt werden.

Das pulverförmige mineralische Material umfasst das pulverförmige Zerfallsprodukt oder besteht aus diesem. Optional kann das pulverförmige mineralische Material kleine Aggregate mit einer Korngröße unterhalb der Grenzkorngröße und/oder unbehandeltes gehärtetes mineralisches Bindemittel mit einer Korngröße unterhalb der Grenzkorngröße umfassen.

Die Abtrennung des pulverförmigen mineralischen Materials von den behandelten Zuschlagstoffen erfolgt insbesondere durch Filtration, Siebung, Sedimentation, Dichtetrennung und/oder Zentrifugation.

Die Behandlung kann in einem Batch-Verfahren oder in einem kontinuierlichen Prozess erfolgen.

Je nach bevorzugter Ausführung kann das Ausgangsmaterial z.B. in einer wässrigen Flüssigkeit, z.B. Wasser, in einem Reaktionsgefäß, z.B. mit einer Konzentration von 0.5 - 5 kg Ausgangsmaterial pro Liter Flüssigkeit, eingetaucht und mit Kohlendioxid unter Rühren oder abrasiven Bedingungen behandelt werden. Das Kohlendioxid kann z.B. durch einen Einlass in das Reaktionsgefäß eingebracht werden, der es erlaubt, das Kohlendioxid in gasförmiger Form direkt in die wässrige Flüssigkeit einzubringen. So wird das gasförmige Kohlendioxid in Wasser gelöst und reagiert mit dem gehärteten Bindemittel unter Rühr- und Schleifbedingungen, um das Zerfallsprodukt bzw. das pulverförmige Mineralmaterial zu erzeugen. Vorzugsweise wird der Reaktionsbehälter gerührt und/oder umfasst einen mechanischen Rührer zum Rühren des Reaktionsgemisches und zur Erzeugung abrasiver Bedingungen. Die Abtrennung des pulverförmigen mineralischen Materials von den behandelten Aggregaten erfolgt dann insbesondere durch Filtration.

Je nach bevorzugter Ausführungsform werden das pulverförmige mineralische Material und/oder die gewonnenen Zuschlagstoffe nach der Trennung getrocknet. Dies ist insbesondere dann sinnvoll, wenn die Behandlung unter nassen Bedingungen oder in einer Flüssigkeit durchgeführt wurde.

Dies kann z.B. in einem Ofen erfolgen, insbesondere bei einer Temperatur von 30 - 150°C, vorzugsweise bei 80 - 130°C oder 100 - 120°C. Auch die Trocknung mit Hilfe eines Luftstroms, insbesondere eines Warmluftstroms, z.B. mit einer Temperatur von 30 - 150°C ist eine weitere Möglichkeit. Dies führt zu einer schnellen Trocknung des pulverförmigen mineralischen Materials und/oder der Zuschlagstoffe. Es ist aber z.B. auch möglich, die Produkte ohne weitere Maßnahmen unter Umgebungsbedingungen zu trocknen. Dies erfordert keine zusätzliche Energie.

Das pulverförmige mineralische Material kann aber auch als stabile Suspension aufgefangen und in dieser Form verwendet werden. Auch dies erfordert keine zusätzliche Energie und ermöglicht es, den Wasserverbrauch zu reduzieren.

Wurde die Behandlung unter nassen Bedingungen oder in einer Flüssigkeit durchgeführt und das Feingut von der flüssigen Phase abgetrennt, kann diese flüssige Phase für eine weitere Behandlung nach der vorliegenden Erfindung wiederverwendet/recycelt werden. In einem ersten Aspekt betrifft die vorliegende Erfindung die Verwendung von Prozesshilfsmitteln in einem Verfahren zur Gewinnung von Zuschlagstoffen und/oder pulverförmigem mineralischem Material aus einem Ausgangsmaterial, das gehärtetes mineralisches Bindemittel und Zuschlagstoffe umfasst, wobei das Verfahren die folgenden Schritte umfasst:
a) Behandlung des Ausgangsmaterials in einem Zertrümmerungsvorgang, insbesondere unter abrasiven Bedingungen, wobei das gehärtete mineralische Bindemittel zumindest teilweise, insbesondere im Wesentlichen vollständig, karbonatisiert und von der Oberfläche der Aggregate entfernt wird, so dass ein pulverförmiges Zertrümmerungsprodukt entsteht,
b) Abtrennen des behandelten Ausgangsmaterials bei einer vordefinierten Grenzkorngröße, um behandelte Zuschlagstoffe mit einer Korngröße von mindestens der vordefinierten Grenzkorngröße zu gewinnen und/oder um pulverförmiges mineralisches Material mit einer Korngröße unterhalb der vordefinierten Grenzkorngröße zu gewinnen.

Prozesshilfsmittel welche im Rahmen der vorliegenden Erfindung verwendet werden können, sind ausgewählt aus der Gruppe bestehend aus Polycarboxylatethern und/oder - estern (**PCE**), Glykolen, organischen Aminen, insbesondere Alkanolaminen, Ammoniumsalzen von organischen Aminen mit Carbonsäuren, Tensiden, insbesondere nicht-ionischen Tensiden, Gemini-Tensiden, Calciumstearat, alkoxylierten Phosphonsäure- oder Phosphorsäureestern, 1,3-Propandiol, Carbonsäuren, sulphonierten Aminoalkoholen, Borsäure, Salzen der Borsäure, Borax, Salzen der Phosphorsäure, Glukonat, Eisensulphat, Zinnsulphat, Antimonsalzen, Alkalisalzen, Erdalkalisalzen, Ligninsulphonaten, Glyzerin, Melamin, Melaminsulphonaten, wasserabsorbierenden Mitteln in Form eines Superabsorberpolymers oder in Form eines Schichtsilikats, Antibackmitteln, Zuckenr, Zuckersäuren, Zuckeralkoholen, Phosphaten, Phosphonaten, sowie deren Mischungen.

In einer Ausführungsform der vorliegenden Erfindung werden als Prozesshilfsmittel organische Amine, insbesondere Alkanolamine verwendet. In dieser Ausführungsform umfasst das Prozesshilfsmittel demnach Alkanolamine oder besteht im Wesentlichen aus diesen. Geeignete organische Amine sind dem Fachmann an sich bekannt, beispielsweise aus der US 2009/0292041. Alkanolamine sind im Rahmen der vorliegenden Erfindung speziell bevorzugt. Geeignete Alkanolamine sind besonders bevorzugt ausgewählt aus der Gruppe umfassend Monoethanolamin, Diethanolamin, Triethanolamin (TEA), Diethanolisopropanolamin (DEIPA), Ethanoldiisopropanolamin (EDIPA), Isopropanolamin, Diisopropanolamin, Triisopropanolamin (TIPA), N-Methyldiisopropanolamin (MDIPA), N-Methyldiethanolamin (MDEA), Tetrahydroxyethylethylendiamin (THEED) und Tetrahydroxyisopropylethylendiamin (THIPD) sowie Mischungen aus zwei oder mehr dieser Alkanolamine. Es ist ebenfalls möglich, Salze dieser Alkanolamine einzusetzen.

Geeignete organische Amine können auch Amine der allgemeinen Formel

R^{e}-NH-(AO)ₙ-H

sein,
wobei
Re eine lineare, verzweigte oder zyklische Alkylgruppe mit 1-6 Kohlenstoffatomen darstellt,
AO eine Alkylenoxideinheit darstellt, bevorzugt Ethylenoxid und/oder Propylenoxid, besonders bevorzugt Ethylenoxid,
n = 1-55, bevorzugt 1-20 ist.

Weitere organische Amine, die im Rahmen der vorliegenden Erfindung verwendet werden können sind Ethylendiamin, Hexylendiamin, Diethylentriamin, Triethylentetramin, Tetraethylenpentamin, Isophorondiamin, Polyaminoalkohole wie Aminoethylethanolamin, Tetra(hydroxyethyl)ethylendiamin, Polyaminocarboxylate wie Iminodibernsteinsäure, Ethylendiamintetraessigsäure, Ethylendiaminbernsteinsäure oder Polyasparaginsäure.

In einer anderen Ausführungsform der vorliegenden Erfindung werden als Prozesshilfsmittel Glykole und/oder Glyzerin eingesetzt. In dieser Ausführungsform umfasst das Prozesshilfsmittel demnach Glykole und/oder Glyzerin oder besteht im Wesentlichen aus diesen.

Beispiele für geeignete Glykole sind Monoethylenglykol, Diethylenglykol, Triethylenglykol, Tetraethylenglykol, Pentaethylenglykol, Polyethylenglykol, insbesondere mit 6 oder mehr Ethylen-Einheiten, z.B. PEG 200, Neopentylglykol, Hexylenglykol, Propylenglykol, Dipropylenglykol sowie Polypropylenglykol. Es ist auch möglich, Mischungen von zwei oder mehr unterschiedlichen Glykolen sowie von mindestens einem Glykol und Glyzerin einzusetzen.

In einer Ausführungsform ist das Glyzerin ein sogenanntes Bio-Glyzerin, welches sich aus einem nachwachsenden Rohstoff herstellen lässt.

Es ist insbesondere auch möglich, Mischungen von Glykolen und Alkanolaminen als Prozesshilfsmittel einzusetzen. Dabei können diese einem erfindungsgemässen Prozess getrennt voneinander zugegeben werden. Es ist aber auch möglich, Vormischungen herzustellen und diese einzusetzen. Die Verwendung solcher Vormischungen kann hilfreich sein, um Dosierfehler zu vermeiden.

In einer weiteren Ausführungsform der vorliegenden Erfindung wird als Prozesshilfsmittel Ligninsulphonat verwendet. In dieser Ausführungsform umfasst das Prozesshilfsmittel demnach Lignosulphonat oder besteht im Wesentlichen aus diesem.

Der Begriff "Ligninsulphonat" steht hier für ein Salz, das sich aus Ligninsulfonat-Anionen und geeigneten Kationen zusammensetzt und umfasst insbesondere die Substanzen Natriumligninsulphonat (CAS-Nr. 8061-51-6), Magnesiumligninsulphonat (CAS-Nr. 8061-54-9), Calciumligninsulphonat (CAS-Nr. 8061-52-7). Das Kation spielt für die Wirksamkeit in der vorliegenden Erfindung keine Rolle.

Ligninsulphonate werden aus Lignin dargestellt, das wiederum in Pflanzen, speziell holzigen Pflanzen entsteht.

Lignin ist ein dreidimensionales, amorphes Polymer, das im Gegensatz zu den meisten anderen Biopolymeren keine regelmässig geordneten oder wiederholten Einheiten aufweist. Aus diesem Grund kann keine definierte Ligninstruktur genannt werden, obwohl diverse Modelle für eine "durchschnittliche" Struktur vorgeschlagen worden sind. Die Uneinheitlichkeit des Lignins zwischen Pflanzen verschiedener Taxa, ebenso wie zwischen den verschiedenen Geweben, Zellen und Zellwandschichten einer jeden Spezies, ist dem Fachmann geläufig.

Ligninsulphonate entstehen als Nebenprodukte der Zellstoffherstellung unter dem Einfluss schwefliger Säure, die Sulphonierung und ein gewisses Mass an Demethylierung der Lignine bewirkt. Wie die Lignine sind sie in Struktur und Zusammensetzung vielfältig. In Wasser sind sie im gesamten pH-Bereich löslich, in Ethanol, Azeton und anderen gängigen organischen Lösungsmitteln hingegen unlöslich

Ligninsulphonate sind nur wenig oberflächenaktiv. Sie haben nur eine geringe Neigung, die Zwischenflächenspannung zwischen Flüssigkeiten zu verringern, und eignen sich nicht zur Verringerung der Oberflächenspannung des Wassers oder zur Micellenbildung. Als Dispersionsmittel können sie durch Adsorption/Desorption und Ladungsbildung an Substraten fungieren. Ihre Oberflächenaktivität kann jedoch durch Einfügen langkettiger Alkylamine in die Ligninstruktur gesteigert werden.

Methoden zur Isolation und Reinigung von Ligninsulphonaten sind dem Fachmann geläufig. Beim Howard-Verfahren werden Calciumligninsulphonate durch Zusatz eines Überschusses an Kalk zu verbrauchter Sulfitablaugung gefällt. Ligninsulphonate können auch durch Bildung unlöslicher quaternärer Ammoniumsalze mit langkettigen Aminen isoliert werden. Im Industriemassstab können Ultrafiltration and lonenaustauschchromatographie zur Aufreinigung von Ligninsulphonaten verwendet werden.

Erfindungsgemäss verwendbare Ligninsulphonat-Serien sind unter verschiedenen Handelsnamen kommerziell erhältlich, wie z.B. Ameri-Bond, Borresperse (Borregaard), Dynasperse, Kelig, Lignosol, Marasperse, Norlig (Daishowa Chemicals), Lignosite (Georgia Pacific), Reax (MEAD Westvaco), Wafolin, Wafex, Wargotan, Wanin, Wargonin (Holmens), Vanillex (Nippon Paper), Vanisperse, Vanicell, Ultrazine, Ufoxane (Borregaard), Serla-Bondex, Serla-Con, Serla-Pon, Serla-Sol (Serlachius), Collex, Zewa (Wadhof-Holmes), Raylig (ITT Rayonier).

Selbstverständlich können auch Gemische verschiedener Ligninsulphonate eingesetzt werden, ferner können die Ligninsulphonate sowohl in flüssiger als auch in fester Form vorliegen.

Insbesondere wurde nun gefunden, dass eine die Verwendung von Ligninsulphonat als Prozesshilfsmittel in einem erfindungsgemässen Verfahren zur Verminderung des Aufschwimmens von Russ eingesetzt werden kann.

Unter dem Begriff "Russ" wird im vorliegenden Dokument eine Erscheinungsform des Kohlenstoffs verstanden, die sich bei unvollständiger Verbrennung bzw. thermischer Spaltung von dampfförmigen Kohlenstoff-haltigen Substanzen bildet.

Das Ligningsulphonat kann als schüttfähige Zusammensetzung vorliegen, beispielsweise als Pulver, oder als flüssige Zusammensetzung, beispielsweise als wässrige Zusammensetzung.

Es ist vorteilhaft, wenn die Menge an Ligninsulphonat 0.001 - 2.5 Gew.-%, insbesondere zwischen 0.005 und 1.0 Gew.-%, bevorzugt zwischen 0.01 und 0.5 Gew.-%, jeweils bezogen auf die Gesamtmasse der Abbruchtrümmer oder die Bauschuttmaterialien, beträgt.

In einer besonderes bevorzugten Ausführungsform der vorliegenden Erfindung wird als Prozesshilfsmittel mindestens ein Polycarboxylatether und/oder Polycarboxylatester (**PCE**) verwendet. In dieser Ausführungsform umfasst das Prozesshilfsmittel demnach mindestens einen **PCE** oder besteht im Wesentlichen aus diesen.

**PCE** der vorliegenden Erfindung umfassen
(i) Wiederholungseinheiten **A** der allgemeinen Struktur (I), 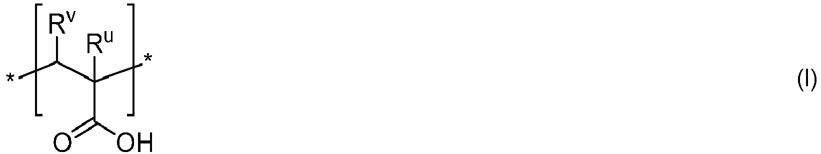 und
(ii) Wiederholungseinheiten **B** der allgemeinen Struktur (II), 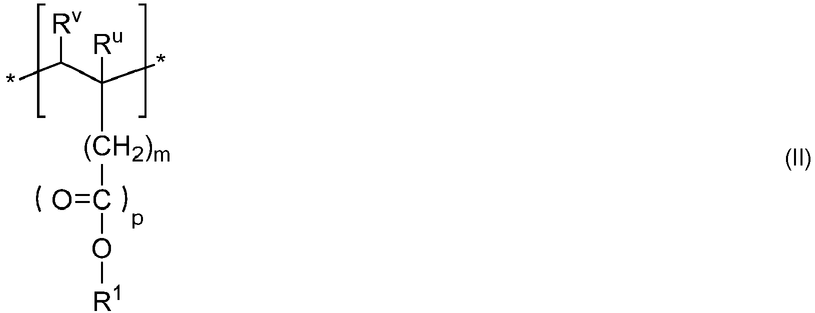 wobei
   jedes R^{u} unabhängig voneinander Wasserstoff oder eine Methylgruppe darstellt,
   jedes R^{v} unabhängig voneinander Wasserstoff oder COOM darstellt, wobei M unabhängig voneinander H, ein Alkalimetall, oder ein Erdalkalimetall ist,
   m = 0, 1, 2 oder 3 ist,
   p = 0 oder 1 ist,
   jedes R¹ unabhängig voneinander -(CH₂)_{z}-[YO]ₙ-R⁴ darstellt, wobei Y ein C2- bis C4-Alkylen und R⁴ ein H, C1- bis C20-Alkyl, -Cyclohexyl, -Alkylaryl, oder ein -N(-Rⁱ)ⱼ-[(CH₂)_{z}-PO₃M]₃₋ⱼ darstellt, z = 0, 1, 2, 3 oder 4 ist, n = 2 - 350 ist, j = 0, 1 oder 2 ist, Ri ein Wasserstoffatom oder eine Alkylgruppe mit 1 - 4 Kohlenstoffatomen darstellt und M ein Wasserstoffatom, ein Alkalimetall, ein Erdalkalimetall oder ein Ammoniumion darstellt, und wobei die Wiederholungseinheiten **A** und **B** im **PCE** ein molares Verhältnis von **A : B** im Bereich von 10 : 90 - 90 :10 aufweisen.

In einer bevorzugten Ausführungsform beträgt n = 10 - 250, mehr bevorzugt 30 - 200, besonders bevorzugt 35 - 200, insbesondere 40 - 110.

In einer weiteren bevorzugten Ausführungsform ist z = 0. In einer weiteren bevorzugten Ausführungsform ist z = 4.

In einer besonders bevorzugten Ausführungsform umfasst das **PCE** Wiederholungseinheiten **A** der allgemeinen Struktur (I) sowie Wiederholungseinheiten **B** der allgemeinen Struktur (II), wobei die molaren Verhältnisse von **A** zu **B** im Bereich von 20 : 80 - 80 : 20, mehr bevorzugt 30 : 70 - 80 : 20, insbesondere 35 : 65 - 75 : 25 liegen.

Ein **PCE** hat bevorzugt eine mittlere Molmasse M_{w} im Bereich von 1'000 - 1'000'000, besonders bevorzugt 1'500 - 500'000, ganz besonders bevorzugt 2'000 - 100'000, insbesondere 3'000 - 75'000 oder 3'000 - 50'000 g/mol. Die Molmasse M_{w} wird vorliegend durch Gel-Permeations-Chromatographie (GPC) mit Polyethylenglycol (PEG) als Standard bestimmt. Diese Technik ist dem Fachmann an sich bekannt.

Erfindungsgemässe **PCE** können statistische oder nicht-statistische Copolymere sein. Nicht-statistische Copolymere sind insbesondere alternierende Copolymere oder Block- oder Gradienten-Copolymere oder Mischungen davon.

Erfindungsgemässe **PCE,** welche statistische Copolymere sind, können durch freie radikalische Polymerisation von Mischungen umfassend mindestens ein olefinisch ungesättigtes Carbonsäure-Monomer der allgemeinen Struktur (la) 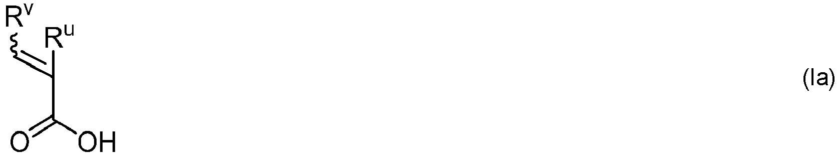 sowie mindestens ein olefinisch ungesättigtes Monomer der allgemeine Struktur (IIa) 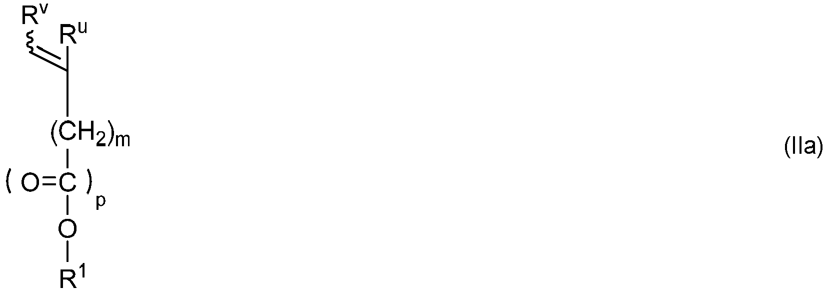 hergestellt werden,
wobei R^{u}, R^{v}, m, p, und R¹ die oben angegebenen Bedeutungen haben und die geschlängelte Bindung sowohl für cis- als auch trans-Doppelbindungsisomere bzw. deren Mischung steht.

Geeignete Bedingungen zur Durchführung der freien radikalischen Polymerisation sind dem Fachmann an sich bekannt und beispielsweise beschreiben in EP 1 103 570 (Nippon Shokubai).

Erfindungsgemässe **PCE,** welche nicht-statistische Copolymere sind, insbesondere Block- oder Gradienten-Copolymere, können bevorzugt durch lebende freie radikalische Polymerisation hergestellt werden. Die Techniken der lebenden freien radikalischen Polymerisation sind unter anderem die Nitroxid-vermittelte-Polymerisation (NMP), die Atom-Transfer-Radikalpolymerisation (ATRP) oder die Reversible Additions-Fragmentierungs Kettenübertragungs-Polymerisation (RAFT). Die lebende freie radikalische Polymerisation erfolgt im Wesentlichen unter Abwesenheit von irreversiblen Übertragungs- oder Abbruchreaktionen. Die Zahl der aktiven Kettenenden ist gering und bleibt während der Polymerisation im Wesentlichen konstant. Dies wird beispielsweise bei der RAFT-Polymerisation durch die Verwendung eines RAFT-Agens und einer nur geringen Menge an Initiator erreicht. Dadurch wird ein im Wesentlichen zeitgleiches und während des gesamten Polymerisationsprozesses anhaltendes Wachstum der Ketten ermöglicht. Dadurch ergibt sich die Möglichkeit, mit diesem Prozess Block- oder Gradienten- Copolymere herzustellen und es ergibt sich entsprechend eine enge Molekulargewichtsverteilung bzw. Polydispersität des Polymers. Dies ist bei der herkömmlichen "freien radikalischen Polymerisation" bzw. der nicht lebend durchgeführten freien radikalischen Polymerisation nicht möglich. Besonders vorteilhaft können nicht-statistische Copolymere der vorliegenden Erfindung mittels RAFT-Polymerisation hergestellt werden. Vorteilhafte RAFT-Agentien sind Dithioester, Dithiocarbamat, Trithiocarbonat oder Xanthat. Vorteilhafte Initiatoren sind Azobisisobutyronitril (AIBN), *α,α'-*Azodiisobutyramidine dihydrochloride (AAPH) oder Azo-bis-isobutyramidin (AIBA).

Entsprechend einer besonders bevorzugten Ausführungsform wird die radikalische Polymerisation als Lösungspolymerisation, insbesondere in einem Lösemittel enthaltend Wasser, durchgeführt. Es ist ganz besonders bevorzugt, die Polymerisation in reinem Wasser durchzuführen. Es ist bevorzugt, die radikalische Polymerisation zur Herstellung von erfindungsgemässen **PCE** bis zu einem Umsatz von mindestens 75%, bevorzugt mindestens 80 %, mehr bevorzugt mindestens 90%, ganz besonders bevorzugt mindestens 95%, im Speziellen mindestens 98% oder mehr, jeweils bezogen auf die gesamte Stoffmenge der vorhandenen Monomeren, zu fahren.

Erfindungsgemässe **PCE** können auch durch eine polymeranaloge Umsetzung hergestellt werden. Insbesondere können erfindungsgemässe **PCE** durch die Veresterung eines Homo- oder Copolymers umfassend Wiederholungseinheiten der allgemeine Struktur (I) mit Polyalkylenglykolen der allgemeinen Struktur (III) hergestellt werden

HO-R¹ (III),

wobei R¹ die oben angegeben Bedeutung hat.

Geeignete Verfahren zur Herstellung von erfindungsgemässen **PCE** durch Veresterung sind dem Fachmann an sich bekannt und beispielsweise beschrieben in EP 1138697 (Sika AG).

Zusätzlich zu dem mindestens einen olefinisch ungesättigten Carbonsäure-Monomer der allgemeinen Struktur (la) und dem mindestens einen olefinisch ungesättigten Makromonomer der allgemeinen Struktur (IIa) können erfindungsgemässe **PCE** ein oder mehrere weitere Monomere **M** enthalten. Diese weiteren Monomere **M** können ausgewählt sein aus Styrol, Ethylen, Propylen, Butylen, Butadien, Isopren, Vinylacetat, Vinylchlorid, Acrylonitril, N-Vinylpyrrolidon und/oder Hydroxyalkyl(meth)acrylaten.

Es ist bevorzugt, dass der molare Anteil des einen oder der mehreren weiteren Monomeren **M** gleich oder kleiner 66 mol%, bevorzugt gleich oder kleiner 50 mol-%, mehr bevorzugt gleich oder kleiner 25 mol-%, besonders bevorzugt gleich oder kleiner 10 mol-%, insbesondere gleich oder kleiner 5 mol-%, jeweils bezogen auf alle das **PCE** aufbauenden Monomere, ist. In einer ganz besonders bevorzugten Ausführungsform ist das **PCE** im Wesentlichen frei von weiteren Monomereinheiten **M.** Demnach besteht ein erfindungsgemässes **PCE** zu mindestens 34 mol%, bevorzugt mindestens 50 mol%, mehr bevorzugt mindestens 75 mol%, besonders bevorzugt mindestens 90 mol%, insbesondere 100 mol% aus den Wiederholungseinheiten **A** und **B.**

In einer ganz besonders bevorzugten Ausführungsform besteht das **PCE** der vorliegenden Erfindung demnach aus
(i) Wiederholungseinheiten **A** der allgemeinen Struktur (I), 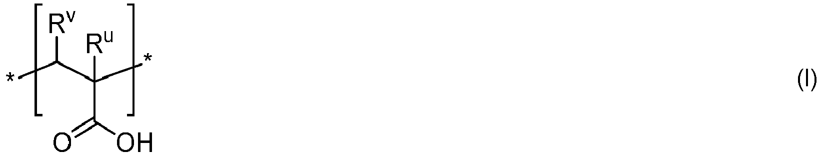 und
(ii) Wiederholungseinheiten **B** der allgemeinen Struktur (II), 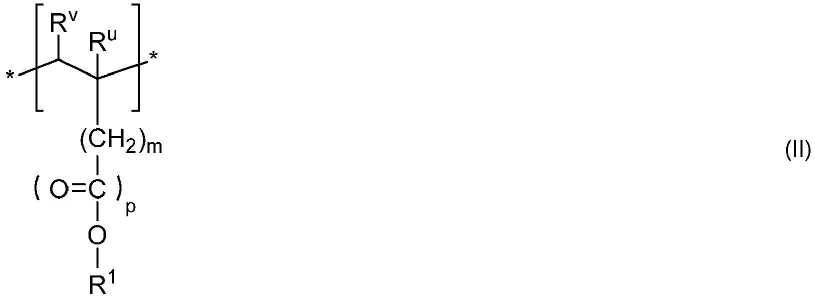 wobei
   jedes R^{u} unabhängig voneinander Wasserstoff oder eine Methylgruppe darstellt,
   jedes R^{v} unabhängig voneinander Wasserstoff oder COOM darstellt, wobei M unabhängig voneinander H, ein Alkalimetall, oder ein Erdalkalimetall ist,
   m = 0, 1, 2 oder 3 ist,
   p = 0 oder 1 ist,
   jedes R¹ unabhängig voneinander -(CH₂)_{z}-[YO]ₙ-R⁴ darstellt, wobei Y ein C2- bis C4-Alkylen und R⁴ ein H, C1- bis C20-Alkyl, -Cyclohexyl, oder -Alkylaryl, darstellt,
   z = 0, 1, 2, 3 oder 4 ist, n = 2 - 350 ist,
   und wobei die Wiederholungseinheiten **A** und **B** im **PCE** ein molares Verhältnis von **A : B** im Bereich von 10 : 90 - 90 :10 aufweisen.

**PCE** der vorliegenden Erfindung können als Feststoff, insbesondere als Pulver vorliegen. **PCE** der vorliegenden Erfindung können aber auch in flüssiger form vorliegen. Geeignete flüssige Formen sind Schmelzen der erfindungsgemässen **PCE,** oder wässrige Zusammensetzungen, wie wässrige Lösungen oder wässrige Dispersionen der **PCE.**

Die Herstellung wässriger Zusammensetzungen erfolgt durch Zusetzen von Wasser bei der Herstellung des **PCE** oder durch nachträgliches Vermengen von **PCE** mit Wasser.

Typischerweise beträgt der Anteil des **PCE** 10 bis 90 Gewichts-%, insbesondere 25 bis 50 Gew.-%, bezogen auf das Gewicht der wässrigen Zusammensetzung.

Je nach Art des **PCE** entsteht eine Dispersion oder eine Lösung. Bevorzugt wird eine Lösung.

Die wässrige Zusammensetzung kann weitere Bestandteile enthalten. Beispiels hierfür sind Lösungsmittel oder Additive, wie sie in der Betontechnologie geläufig sind, insbesondere oberflächenaktive Stoffe, Stabilisatoren gegen Hitze und Licht, Farbstoffe, Entschäumer, Beschleuniger, Verzögerer, Korrosionsinhibitoren, Luftporenbildern.

In einer Ausführungsform der Erfindung wird ein **PCE** eingesetzt. Es ist aber auch möglich, und in manchen Fällen bevorzugt, eine Mischung aus mehreren, chemisch unterschiedlichen **PCE** einzusetzen.

In einer weiteren Ausführungsform wird ein **PCE** in Kombination mit mindestens einem weiteren Prozesshilfsmittel eingesetzt. Besonders bevorzugte weitere Prozesshilfsmittel sind Glykole, organische Amine, insbesondere Alkanolamine, Ammoniumsalze von organischen Aminen mit Carbonsäuren, Tenside, insbesondere nicht-ionische Tenside, Gemini-Tenside, Calciumstearat, alkoxylierte Phosphonsäure- oder Phosphorsäureester, 1,3-Propandiol, Carbonsäuren, sulphonierte Aminoalkohole, Borsäure, Salze der Borsäure, Borax, Salze der Phosphorsäure, Sorbit, Saccharide, Glukonat, Eisensulphat, Zinnsulphat, Antimonsalze, Alkalisalze, Erdalkalisalze, Ligninsulphonat, Glyzerin, Melamin, Melaminsulphonat, wasserabsorbierende Mittel in Form eines Superabsorberpolymers oder in Form eines Schichtsilikats, Antibackmitteln, Zucker, Zuckersäuren, Zuckeralkohole, Phosphate, Phosphonate.

Glykole, organische Amine, insbesondere Alkanolamine und Ligninsulphonate sind wie oben definiert.

Die Carbonsäure ist vorzugsweise ausgewählt aus Ameisensäure, Essigsäure, Propionsäure, Milchsäure, Zitronensäure oder Weinsäure.

Das Alkali- oder Erdalkalisalz ist vorzugsweise ausgewählt aus Alkali- oder Erdalkalihalogenid, Alkali- oder Erdalkalihydroxid, Alkali- oder Erdalkalinitrat, Alkali- oder Erdalkalinitrit und Alkali- oder Erdalkalithiocyanat. Beispiele für Alkali- und Erdalkalihalogenide sind Alkali- und Erdalkalichloride, Alkali- und Erdalkalifluoride, Alkali- und Erdalkalibromide und Alkali- und Erdalkaliiodide. Beispiele für geeignete Alkali- und Erdalkalimetalle für diese Salze sind Li, Na, K, Mg und Ca. Konkrete Beispiele sind Calciumchlorid, Natriumchlorid, Natriumthiocyanat und Natriumcarbonat.

Borsäure und deren Salze, Salze der Phosphorsäure, Saccharide, Sorbit und Glukonate sind auch als Verzögerer bekannt. Bei den Sacchariden bzw. Kohlenhydraten kann es sich um Polysaccharide und Oligosaccharide oder Zucker handeln. Ein Beispiel für ein Glukonat ist Natriumglukonat.

Eisensulphat, Zinnsulphat und Antimonsalze sind auch als Chromat(VI) reduzierende Substanzen in Zementen bekannt.

Wird ein **PCE** in Kombination mit mindestens einem weiteren Prozesshilfsmittel eingesetzt, so ist es möglich, die unterschiedlichen Prozesshilfsmittel getrennt voneinander zuzudosieren. Es ist aber auch möglich, Vormischungen der unterschiedlichen Prozesshilfsmittel herzustellen und diese zuzugeben. Auf diese Weise können Dosierfehler minimiert werden. In einer besonders bevorzugten Ausführungsform wird das mindestens eine Prozesshilfsmittel einer wässrigen **PCE**-Zusammensetzung wie oben beschrieben zugegeben. Eingesetzt wird also eine wässrige Zusammensetzung, die mindestens einen **PCE** und das eine oder die mehreren weiteren Prozesshilfsmittel enthält.

Die Dosierung erfolgt bevorzugt so, dass der mindestens eine **PCE** zu 0.001 - 2.5 Gew.-%, insbesondere zwischen 0.005 und 1.0 Gew.-%, bevorzugt zwischen 0.01 und 0.5 Gew.-%, bezogen auf die eingesetzten Abbruchtrümmer oder Bauschuttmaterial, vorhanden ist.

Des Weiteren kann es vorteilhaft sein, wenn der mindestens eine **PCE** in Form einer Zusammensetzung mit wenigstens einem Additiv, beispielsweise einem Mahladditiv, einem Betonzusatzmittel und/oder einem Mörtelzusatzmittel verwendet wird. Das wenigstens eine Additiv ist insbesondere ausgewählt aus der gruppe bestehend aus Fliessmitteln, welche kein **PCE** sind, Mahlhilfsmitteln, Chromreduzierern, Entschäumern, Farbstoffen, Pigmenten, Konservierungsmitteln, Verzögerern, Beschleunigern, Luftporenbildnern, Schwindreduzierern, Korrosionsinhibitoren oder Mischungen davon.

Solche Zusammensetzung beinhaltet oder besteht bevorzugt aus:
a) 5 - 99 Gew.-%, bevorzugt 5 - 50, weiter bevorzugt 5 - 30 Gew.-% Gew.-%, **PCE;**
b) 1 - 80 Gew.-%, bevorzugt 5 - 60 Gew.-%, weiter bevorzugt 5 - 30 Gew.-%, wenigstens eines weiteren Prozesshilfsmittels;
c) 0 - 90 Gew.-%, insbesondere 1 - 20 Gew.-%, wenigstens eines weiteren Additives;
d) 0 - 90 Gew.-%, insbesondere 10 - 60 Gew.-%, Wasser,
jeweils bezogen auf das Gesamtgewicht der Zusammensetzung.

Insbesondere kann es Vorteilhaft sein, den mindestens einen **PCE** in einer Zusammensetzung mit einem Polyakylenglykol zu verwenden. Das Polyalkylenglykol ist dabei eine Verbindung der allgemeinen Formel (III) oder eine Verbindung der allgemeinen Formel (II), in der p = 0 ist. Bevorzugt hat das Polyalkylenglykol ein Molgewicht Mw von 1'000 - 50'000 g/mol, bevorzugt 4'000 bis 6'000 g/mol. In einer besonders bevorzugten Ausführungsform ist das Polyalkylenglykol ein Polyethylenglykol (PEG), Methoxypolyethylenglykol (MPEG) oder ein Polypropylenglykol (PPG). Besonders bevorzugt ist das Polyethylenglykol (PEG) oder das Methoxypolyethylenglykol (MPEG). Solche Mischungen sind besonders geeignet, um die Verarbeitungszeit von hydraulisch abbindenden Zusammensetzungen zu verlängern und das Fliessverhalten zu verbessern.

In einer weiteren Ausführungsform der vorliegenden Erfindung wird als Prozesshilfsmittel mindestens ein Tensid verwendet. In dieser Ausführungsform umfasst das Prozesshilfsmittel demnach mindestens ein Tensid oder besteht im Wesentlichen aus diesem.

Tenside sind dem Fachmann an sich wohlbekannt und beispielsweise zusammengefasst in «Surfactants and Polymers in aqueous solutions « (Wiley-VCH, K. Holmberg et al, 2nd Edition, 2007). Tenside können nicht-ionische Tenside, kationische Tenside, anionische Tenside oder zwitterionische Tenside sein. Es kann insbesondere vorteilhaft sein, nicht-ionische Tenside einzusetzen, da diese eine niedrige Neigung zur Absorption an Zementphasen haben. Solche nicht-ionischen Tenside mit einer geringen Neigung zur Absorption an Zementphasen sind in bestimmten Anwendungen besonders bevorzugt. Es ist aber auch möglich kationische, anionische oder zwitterionische Tenside einzusetzen.

Geeignete Tenside im Rahmen der vorliegenden Erfindung sind beispielsweise Lipide wie Cholate, Glycocholate, Fettsäuresalze, Glyceride, Glycolipide und Phospholipide. Diese können aus natürlichen Quellen stammen oder synthetisch hergestellt sein. Nicht-ionische Lipide sind in bestimmten Ausführungsformen bevorzugt.

Geeignete anionische Tenside sind insbesondere Alkylethercarboxylate, Alkylsulfate, Alkylethersulfate, Alkylsulfosuccinate, Alkylphosphate, Alkyletherphosphonate und Alkylbenzolsulfonate.

Geeignete nicht-ionische Tenside sind insbesondere Fettsäurealkoxylate, alkoxylierte Alkohole, insbesondere Fettsäurealkoholalkoxylate sowie Alkoxylate von Glyzerin und Pentaerythritol, Alkylphenolalkoxylate, alkoxylierte Polysaccharide, alkoxylierte Polykondensate, Fettsäureamidalkoxylate, Ester von Fettsäuren, insbesondere Fettsäureester von Methanol, Sorbitan, Glycerol oder Pentaerythritol, alkoxylierte Alkylamine mit einem Alkylrest bestehend aus 6-20 Kohlenstoffatomen, Alkylglycoside, Alkylglucamide, Ester von Fettsäuren und Zuckern, sowie alkoxylierte Sorbitane, Copolymere aus Ethylenoxid und Propylenoxid, Laurylethersulphonate, Naphthalinsulfonate, hydrophobisierte Stärke, hydrophobisierte Cellulose oder Siloxanbasierte Tenside. Bevorzugte Alkoxylate sind in diesem Zusammenhang besonders Ethoxylate.

Geeignete kationische Tenside enthalten insbesondere Ammoniumgrupen oder quarternäre Stickstoffatome und besitzen darüber hinaus mindestens einen langkettigen Alkylrest. Beispiele für kationische Tenside sind Betaine, Amidobetaine, Imidazoline und Amin-N-oxide.

In ganz besonders bevorzugten Ausführungsformen wird mindestens ein Tensid in Kombination mit mindestens einem weiteren Prozesshilfsmittel, insbesondere mindestens einem PCE, einem Ligninsulphonat, einem Alkanolamin, einem Alkalisalz, einem Erdalkalisalz, oder einem wasserabsorbierenden Mittel verwendet.

Im Rahmen der vorliegenden Erfindung ganz besonders bevorzugte nicht-ionische Tenside sind Verbindungen der allgemeinen Formel (IV) 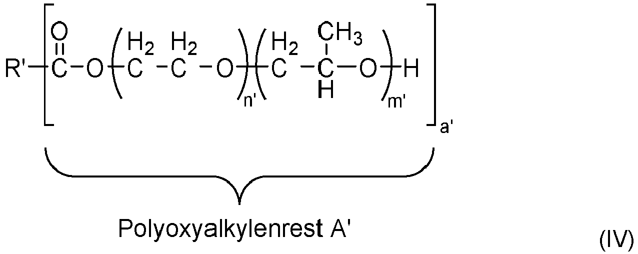 wobei
R' ein a'-valenter, linearer oder verzweigter, gesättigter, einfach oder mehrfach ungesättigter aliphatischer, cycloaliphatischer oder aromatischer Kohlenwasserstoffrest mit 3 bis 38 Kohlenstoffatomen, bevorzugt mit 5 bis 17 Kohlenstoffatomen ist, wobei die Kohlenwasserstoffkette mit a' Polyoxyalkylenresten A', bei linearen Kohlenwasserstoffketten bevorzugt terminal (also an einem oder beiden Enden der linearen Kohlenwasserstoffkette), substituiert ist, wobei substituiert vorliegend bedeutet, dass jeweils ein Wasserstoffatom des Kohlenwasserstoffrestes R' durch einen Polyoxyalkylenrest A' ersetzt wird, bevorzugt ist R' ein linearer oder verzweigter, gesättigter, einfach oder mehrfach ungesättigter aliphatischer, Kohlenwasserstoffrest mit 3 bis 38 Kohlenstoffatomen, bevorzugt mit 5 bis 17 Kohlenstoffatomen, wobei die Kohlenwasserstoffkette mit 1 oder 2 (a = 1 oder 2), bevorzugt mit 1, Polyoxyalkylenresten A' terminal substituiert ist, besonders bevorzugt ist R' ein linearer gesättigter oder ungesättigter aliphatischer, Kohlenwasserstoffrest mit 5 bis 17 Kohlenstoffatomen, wobei die Kohlenwasserstoffkette mit einem Polyoxyalkylenrest A' (a' = 1) terminal substituiert ist,
a' = 1 bis 4, bevorzugt kleiner als 3, weiter bevorzugt 1 bis 2, besonders bevorzugt 1,
n' = 0 bis 40, bevorzugt 2 bis 30, besonders bevorzugt 4 bis 20,
m' = 0 bis 40, bevorzugt 2 bis 30, besonders bevorzugt 4 bis 20 ist,
mit der Maßgabe, dass die Summe aus n' und m' = 4 bis 80, bevorzugt von 6 bis 40, besonders bevorzugt 8 bis 20 ist,
wobei die mit n' und m' bezeichneten Einheiten wahlweise blockartig oder statistisch in der Polyetherkette verteilt sind und die mit n' und m' bezeichneten Einheiten die Mittelwerte der möglichen statistischen Verteilung der tatsächlichen vorhandenen Strukturen darstellen.

Alkoxylierte Polykondensate sind im Rahmen der vorliegenden Erfindung insbesondere Polykondensationsprodukte, die aus einer Kondensation der nachfolgenden Verbindungen A, B sowie mindestens einem Aldehyd der allgemeinen Formel C erhalten werden.
(A) 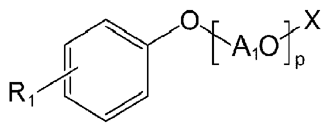
(B) 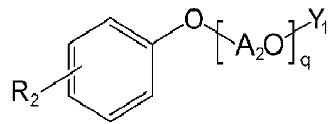
(C) R₃-CHO, HO(CH₂O)ᵣH or (CH₂O)₃
   wobei R₁ ein Wasserstoff, eine Alkylgruppe mit 1-24 Kohlenstoffatomen oder eine Alkenylgruppe mit 2-24 Kohlenstoffatomen darstellt,
   A₁O und A₂O unabhängig voneinander eine Alkylenoxidgruppe mit 2-4 Kohlenstoffatomen darstellt,
   p und q unabhängig voneinander eine Zahl zwischen 1 bis 300 ist,
   X ein Wasserstoffatom, eine Alkylgruppe mit 1-10 Kohlenstoffatomen oder eine Acylgruppe mit 2-24 Kohlenstoffatomen darstellt,
   R₂ eine Alkylgruppe mit 4 - 24 Kohlenstoffatomen oder eine Alkenylgruppe mit 4 - 24 Kohlenstoffatomen darstellt,
   Y₁ eine Phosphonat oder eine Phosphatgruppe,
   R₃ ein Wasserstoffatom, eine Carboxylgruppe, eine Alkylgruppe mit 1-10 Kohlenstoffatomen, eine Alkenylgruppe mit 2-10 Kohlenstoffatomen, eine Phenylgruppe, eine Naphthylgruppe, oder einen Heterozyklus darstellt, und
   r eine Zahl zwischen 1 - 100 ist.

Nicht-ionische Tenside können je nach Anwendung auch das Schwinden von hydraulischen Zusammensetzungen reduzieren.

In einer weiteren Ausführungsform der vorliegenden Erfindung wird als Prozesshilfsmittel mindestens ein Gemini-Tensid verwendet. In dieser Ausführungsform umfasst das Prozesshilfsmittel demnach ein Gemini-Tensid oder besteht im Wesentlichen aus diesem.

Gemini-Tenside enthalten zwei hydrophile Kopfgruppen und zwei hydrophobe Schwänze, die durch einen Abstandshalter an den Kopfgruppen oder in deren Nähe getrennt sind. Wenn beide hydrophoben Schwänze gleich sind und die hydrophilen Gruppen identisch sind, spricht man von Gemini-Tensiden mit einer symmetrischen Struktur. Die Substituenten in Gemini-Tensiden sind in hohem Maße für das Verhalten dieser Verbindungen in Lösung und ihre möglichen Anwendungen verantwortlich. Insbesondere können Gemini-Tenside quaternäre Stickstoffatome enthalten, welche in der Regel in azyklischen Formen vorliegen. Es gibt jedoch auch Gemini-Tenside, die Stickstoff in gesättigten und ungesättigten Ringen enthalten. Der Abstandhalter kann entweder starr oder flexibel sein, wobei er zur Hydrophobie oder Hydrophilie neigt. Die besonderen Eigenschaften von Gemini-Tensiden können durch Optimierung der hydrohilic-lipophilicbalance (HLB-Wert) beeinflusst werden. Dies kann beispielsweise durch die Einführung ausgeglichener polarer oder hydrophober Gruppen sowohl in Kopfgruppen, Schwänzen oder Abstandshalter erfolgen.

Beispiele für Gemini-Tenside sind Strukturen der folgenden Formeln 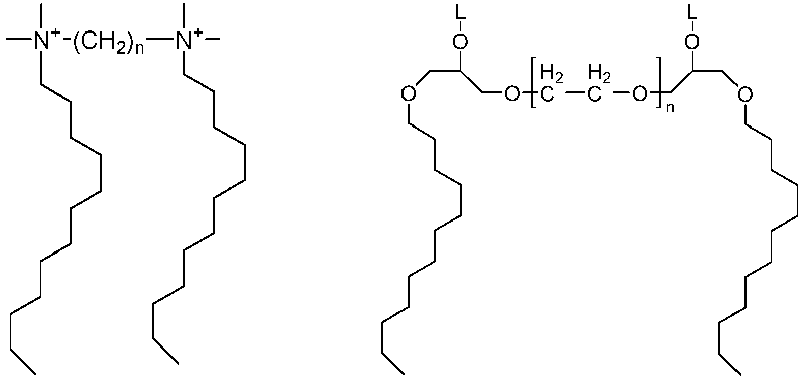 wobei L ein Wasserstoffatom oder eine Sulphonsäuregruppe ist.

Beispiele für bevorzugte Gemini-Tenside sind vorliegend insbesondere alkoxylierte Acetyldiole oder Gemini-Tenside, wie sie in EP0884298 beschrieben sind.

In einer weiteren Ausführungsform der vorliegenden Erfindung wird als Prozesshilfsmittel mindestens ein alkoxylierter Phosphonsäure- oder Phosphorsäureester verwendet. In dieser Ausführungsform umfasst das Prozesshilfsmittel demnach mindestens einen alkoxylierten Phosphonsäure- oder Phosphorsäureester oder besteht im Wesentlichen aus diesem. Solche alkoxylierte Phosphonsäure- oder Phosphorsäureester sind besonders vorteilhaft, wenn pulverförmige mineralische Materialien nach einem erfindungsgemässen Verfahren in hydraulischen Zusammensetzungen enthaltend Flugaschen eingesetzt werden sollen. Solche alkoxylierten Phosphonsäure- oder Phosphorsäureester sind aber auch vorteilhaft bei Anwendungen zur Ascheverbesserungstechnologie.

Geeignete alkoxylierte Phosphonsäure- oder Phosphorsäureester sind Strukturen der allgemeinen Formel (V) 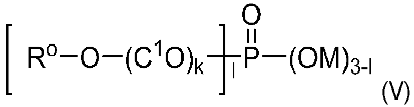 wobei
R° ein Wasserstoffatom, eine Alkylgruppe mit 1-5 Kohlenstoffatomen, eine Alkenylgruppe mit 2-5 Kohlenstoffatomen oder eine (Meth)acryloylgruppe darstellt,
C¹O eine Alkylenoxidgruppe mit 2-4 Kohlenstoffatomen darstellt,
k eine Zahl zwischen 2-150 darstellt, I eine Zahl zwischen 1-3 darstellt, und
M ein Wasserstoffatom, ein Alkalimetall, ein Erdalkalimetall, eine Ammoniumgruppe oder eine organische Ammoniumgruppe darstellt.

Es ist insbesondere auch möglich, eine alkoxylierte Phosphonsäure- oder Phosphorsäureester der allgemeinen Struktur (V) mit einem Polyalkylenglykol, einem **PCE** wie oben beschrieben oder einem Ligninsulphonat wie oben beschrieben, zu kombinieren.

In einer weiteren Ausführungsform der vorliegenden Erfindung wird als Prozesshilfsmittel mindestens ein wasserabsorbierendes Mittel verwendet. In dieser Ausführungsform umfasst das Prozesshilfsmittel demnach mindestens ein wasserabsorbierendes Mittel oder besteht im Wesentlichen aus diesem. Bei dem wasserabsorbierenden Mittel gemäß vorliegender Erfindung handelt es sich insbesondere um ein wasserabsorbierendes Mittel in Form eines Superabsorberpolymers oder in Form eines Schichtsilikats, wobei Schichtsilikate in Form von Vermiculit besonders bevorzugt sind.

Mit dem Begriff "Superabsorberpolymere" sind Polymere gemeint, die große Mengen an Wasser aufnehmen können. Wenn Superabsorberpolymere mit Wasser in Kontakt kommen, diffundieren die Wassermoleküle in die Hohlräume des Polymernetzwerks und hydratisieren die Polymerketten. Das Polymer kann so quellen und ein Polymergel bilden oder sich langsam auflösen. Dieser Schritt ist reversibel, so dass die Superabsorberpolymere in ihren festen Zustand regeneriert werden können, indem das Wasser entfernt wird. Die Eigenschaft der Wasserabsorption wird durch das Quellverhältnis bezeichnet, mit dem das Verhältnis des Gewichts eines gequollenen Superabsorberpolymers zu seinem Gewicht im getrockneten Zustand gemeint ist. Das Quellverhältnis wird durch den Grad der Verzweigung des Superabsorberpolymers, eine gegebenenfalls vorhandene Vernetzung, die chemische Struktur der Monomere, die das superabsorbierende Polymernetzwerk bilden, und externe Faktoren, wie den pH-Wert, die lonenkonzentration der Lösung und die Temperatur beeinflusst. Wegen ihrer Eigenschaft, mit Wasser zu interagieren, werden Superabsorberpolymere auch als Hydrogele bezeichnet.

Beispiele von im Rahmen der vorliegenden Erfindung verwendbaren Superabsorberpolymeren umfassen u.a. natürliche Polymere, wie Stärke, Cellulose, wie Celluloseether, Chitosan oder Collagen, Alginate, synthetische Polymere, wie Poly(hydroxyethylmethacrylat), Poly(ethylenglycol) oder Poly(ethylenoxid) oder ionische synthetische Polymere, wie Polyacrylsäure (PAA), Polymethacrylsäure (PMAA), Polyacrylamide (PAM), Polymilchsäure (PLA), Polyethylenimin, Polyvinylalkohol (PVA) oder Polyvinylpyrrolidon.

Superabsorberpolymere, die aus ionischen Monomeren hergestellt werden, absorbieren normalerweise mehr Wasser als solche, die aus neutralen Monomeren hergestellt werden, was in der elektrostatischen Abstoßung zwischen den einzelnen Polymerketten begründet ist. Das Maß der Vernetzung korrespondiert zur Zahl der chemischen Verbindungen. Je höher der Grad der Vernetzung ist und je höher der Anteil der Vernetzungsmittel, desto kürzer ist der Abstand zwischen zwei Vernetzungsstellen, was zu einer Reduktion des Quellgrades führt. Der Grad des Quellens hängt aber auch von externen Faktoren wie dem pH-Wert und der Temperatur ab. Superabsorberpolymere, die aus sauren Monomeren wie Acrylsäure oder Methacrylsäure gebildet werden, können bei pH-Werten oberhalb von 7 deprotoniert werden, so dass in den Polymerketten negative Ladungen erzeugt werden. Die damit verbundene elektrostatische Abstoßung führt zu einem höheren Grad an Quellung in alkalischen Medien. Superabsorberpolymere, die im Rahmen der vorliegenden Erfindung besonders geeignet sind, sind ionische Superabsorberpolymere, insbesondere solche, die auf Polyacrylamid modifiziert mit Acrylsäure basieren und sowohl von linearer als auch vernetzter Struktur sein können.

Eine zweite Klasse von wasserabsorbierenden Mittel, die mit besonderen Vorteilen im Rahmen des erfindungsgemäßen Porzesses eingesetzt werden kann, sind Schichtsilikate, insbesondere in Form von Vermiculit. Der Begriff "Vermiculit" bezeichnet ein Schichtsilikat, das im monoklinen Kristallsystem mit der allgemeinen chemischen Zusammensetzung Mg_{0.7}(Mg, Fe, Al)₆(SiAl)₈O₂₀(OH)₄ · 8 H₂O vorliegt. Vermiculit entwickelt blättrige, schuppige oder massige Aggregate, die entweder farblos oder durch Fremdbeimengungen grauweiß, gelbbraun, graugrün bzw. grün eingefärbt sind.

Die Menge des wasserabsorbierenden Mittels, die im erfindungsgemäßen Verfahren zu besonders günstigen Ergebnissen führt, hängt im Wesentlichen von der Absorptionsfähigkeit des verwendeten Materials für Wasser ab. So weisen Superabsorberpolymere in der Regel eine größere Wasserabsorption auf als Schichtsilikate, so dass eine geringe Menge eines Superabsorber-polymers ausreichend ist, um einen mit einer bestimmten Menge an Schichtsilikat vergleichbaren Effekt zu erzielen. Das Superabsorberpolymer kann im Rahmen des erfindungsgemäßen Verfahrens zweckmäßig in einer Menge von 0.04 bis 2.5 Gew.-%, bevorzugt 0.08 bis 1.0 Gew.-%, und am meisten bevorzugt 0.1 bis 0.5 Gew.-%, bezogen auf das Gesamtgewicht der Abbruchtrümmer oder Bauschuttmaterialien, zugegeben werden. Bei Schichtsilikaten sind hingegen Mengen im Bereich von 2 bis 30 Gew.-%, bevorzugt im Bereich von 4 bis 15 Gew.-%, und am meisten bevorzugt im Bereich von 6 bis 10 Gew.-% sinnvoll.

Die wasserabsorbierenden Mittel sind insbesondere geeignet, die Prozessfeuchte in einem erfindungsgemässen Verfahren zu regeln. Dadurch kann die im chemischen Prozess entstehende Feuchte konsumiert werden. Dadurch kann auch Überschusswasser entfernt werden, welches beispielsweise bei Verwendung von feuchtem oder nassem Ausgangsmaterial vorhanden ist. Dies ist besonders dann wünschenswert, wenn das erfindungsgemässe Verfahren in einem engen Feuchtebereich geführt werden soll.

In einer weiteren Ausführungsform der vorliegenden Erfindung wird als Prozesshilfsmittel mindestens eine Carbonsäure verwendet. In dieser Ausführungsform umfasst das Prozesshilfsmittel demnach mindestens eine Carbonsäure oder besteht im Wesentlichen aus diesem. Die Carbonsäure ist vorzugsweise ausgewählt aus Ameisensäure, Essigsäure, Propionsäure, Glykolsäure, Milchsäure, Äpfelsäure, Zitronensäure, Isozitronensäure, Weinsäure, Oxalsäure, Tartronsäure, Mandelsäure, Salicylsäure, Fettsäuren mit 6-20 Kohlenstoffatomen, insbesondere Stearinsäure, oder deren Salzen.

In einer besonderen Ausführungsform wird als Prozesshilfsmittel Stearinsäure oder deren Salze verwendet. In dieser Ausführungsform umfasst das Prozesshilfsmittel demnach Stearinsäure und/oder deren Salze oder besteht im Wesentlichen aus diesen. Die Verwendung von Stearinsäure und/oder deren Salzen, insbesondere von Calciumstearat, als Prozesshilfsmittel führt zu einer Hydrophobisierung der Oberfläche der erhaltenen Zuschlagstoffe und/oder pulverförmigen mineralischen Materialien.

In einer Ausführungsform der vorliegenden Erfindung werden als Prozesshilfsmittel Alkali- und/oder Erdalkalisalze verwendet. In dieser Ausführungsform umfasst das Prozesshilfsmittel demnach Alkali- und/oder Erdalkalisalze oder besteht im Wesentlichen aus diesen.

Das Alkali- oder Erdalkalisalz ist vorzugsweise ausgewählt aus Alkali- oder Erdalkalihalogenid, Alkali- oder Erdalkalihydroxid, Alkali- oder Erdalkalinitrat, Alkali- oder Erdalkalinitrit, Alkali- oder Erdalkalithiocyanat, Alkali- oder Erdalkalicarbonat, Alkali- oder Erdalkalihydrogencarbonat, Alkali- oder Erdalkalisulphat, Alkali- oder Erdalkalithiosulphat, Alkali- oder Erdalkalisilikat, Alkali- oder Erdalkalialuminat. Beispiele für Alkali- und Erdalkalihalogenide sind Alkali- und Erdalkalichloride, Alkali- und Erdalkalifluoride, Alkali- und Erdalkalibromide und Alkali- und Erdalkaliiodide. Beispiele für geeignete Alkali- und Erdalkalimetalle für diese Salze sind Li, Na, K, Mg und Ca.

In einer Ausführungsform der vorliegenden Erfindung werden als Prozesshilfsmittel Antibackmittel verwendet. In dieser Ausführungsform umfasst das Prozesshilfsmittel demnach Antibackmittel oder besteht im Wesentlichen aus diesen. Antibackmittel, welche im Rahmen der vorliegenden Erfindung eingesetzt werden können sind ausgewählt aus der Gruppebestehend aus Tricalciumphosphat, Cellulose, Magnesiumstearat, Natriumhydrogencarbonat, Natriumhexacynaoferrat, Kaliumhexacyanoferrat, Calciumhexacynaoferrat, Calciumphosphat, Natriumsilikat, Siliziumdioxid, insbesondere pyrogene Silica, Calciumsilikat, Magnesiumtrisilikat, Talkum, Natriumaluminosilikat, Kaliumaluminosilikat, Calciumaluminosilikat, Bentonit, Aluminiumsilikat, Stearinsäure, Polydimethylsiloxan, Natriumlaurat.

In einer Ausführungsform der vorliegenden Erfindung werden als Prozesshilfsmittel Zucker, Zuckersäurem oder Zuckeralkohole verwendet. In dieser Ausführungsform umfasst das Prozesshilfsmittel demnach Zucker, Zuckersäurem oder Zuckeralkohole oder besteht im Wesentlichen aus diesen.

Ein "Zucker" im Sinne der vorliegenden Erfindung ist ein Kohlenhydrat mit einer Aldehydgruppe. In besonders bevorzugten Ausführungsformen gehört der Zucker zur Gruppe der Monosaccharide oder Disaccharide. Beispiele für Zucker sind unter anderem Glycerinaldehyd, Threose, Erythrose, Xylose, Lyxose, Ribose, Arabinose, Allose, Altrose, Glucose, Mannose, Gulose, Idose, Galactose, Tallose, Fructose, Sorbose, Lactose, Maltose, Saccharose, Lactulose, Trehalose, Cellobiose, Chitobiose, Isomaltose, Palatinose, Mannobiose, Raffinose und Xylobiose.

Eine "Zuckersäure" im Zusammenhang mit der vorliegenden Erfindung ist ein Monosaccharid mit einer Carboxylgruppe. Sie kann zu jeder der Klassen der Aldonsäuren, Urosonsäuren, Uronsäuren oder Aldarsäuren gehören. Vorzugsweise ist es eine Aldonsäure. Beispiele für Zuckersäuren, die im Zusammenhang mit der vorliegenden Erfindung nützlich sind, sind unter anderem Glycerinsäure, Xylonsäure, Gluconsäure, Ascorbinsäure, Neuraminsäure, Glucuronsäure, Galacturonsäure, Iduronsäure, Weinsäure, Schleimsäure und Zuckersäure. Die Zuckersäure kann in Form der freien Säure oder als Salz vorliegen. Je nach Ausführungsform können Salze von Zuckersäuren Salze mit Metallen der Gruppen Ia, IIa, Ib, IIb, IVb, VIIIb des Periodensystems der Elemente sein. Bevorzugte Salze von Zuckersäuren sind Salze von Alkali- und Erdalkalimetallen, Eisen, Kobalt, Kupfer oder Zink. Besonders bevorzugt sind Salze mit einwertigen Metallen wie Lithium, Natrium und Kalium.

Ein "Zuckeralkohol" im Zusammenhang mit der vorliegenden Erfindung ist ein mehrwertiger Alkohol, der durch eine Redoxreaktion aus Zuckern gewonnen werden kann. Zuckeralkohole gehören somit zur Klasse der Alditole. Beispiele für Zuckeralkohole sind unter anderem Ethylenglykol, Glycerin, Diglycerin, Threitol, Erythrit, Pentaerythrit, Dipentaerythrit, Xylit, Ribit, Arabit, Sorbit, Sorbitan, Isosorbid, Mannit, Dulcit, Fucit, Idit, Inosit, Volemitol, Lactit, Maltit, Isomalt, Maltotriit, Maltotetrait und Polyglycitol.

In einer weiteren Ausführungsform der vorliegenden Erfindung werden als Prozesshilfsmittel Phosphate oder Phosphonate verwendet. In dieser Ausführungsform umfasst das Prozesshilfsmittel demnach Phosphate oder Phosphonate oder besteht im Wesentlichen aus diesen.

Ein "Phosphat" im Zusammenhang mit der vorliegenden Erfindung ist ein Derivat der Phosphorsäure. Ein Phosphat kann die freie Phosphorsäure, ein Oligomer der Phosphorsäure und/oder ein Polymer der Phosphorsäure wie z.B. Diphosphat, Triphosphat, Tetraphosphat und dergleichen sein. Phosphate können in einem protonierten, teilweise deprotonierten oder vollständig deprotonierten Zustand vorliegen. Sie können auch fluoriert sein. Beispiele für geeignete Phosphate sind Trinatriumorthophosphat und, Tetranatriumpyrophosphat, Natriumhexametaphosphat und Dinatriumfluorphosphat. Es ist ebenfalls möglich, dass sich ein "Phosphat" auf einen Ester der Phosphorsäure oder auf einen Ester eines seiner Oligomere bezieht. Zu den Estern von Phosphorsäuren gehören unter anderem Mischester mit den oben genannten Carbonsäuren und/oder Zuckersäuren, Mischester mit Carbonsäuren, insbesondere mit Fettsäuren, Alkylester, Arylester und Ester mit Polyalkylenglykolen.

Der Begriff "Phosphonat" bezieht sich ebenfalls auf Mono-, Di-, Tri-, Tetra-, Penta- oder Hexaphosphonsäuren sowie deren Oligomere und/oder Ester. Vorzugsweise tragen Phosphonate organofunktionelle Einheiten. Phosphonate können in protoniertem, teilweise deprotoniertem oder vollständig deprotoniertem Zustand vorliegen. Beispiele für geeignete Phosphonate sind 1-Hydroxyethyliden-1,1-diphosphonsäure, 2-Phosphonobutan-1,2,4-tricarbonsäure, 3-Aminopropylphosphonsäure, Aminotri(methylenphosphonsäure) und Diethylentriaminpenta(methylenphosphonsäure).

Es ist selbstverständlich möglich und in manchen Fällen auch erwünscht, dass zwei oder mehr der erfindungsgemässen Prozesschemikalien in einem Verfahren wie oben beschreiben eingesetzt werden.

Insbesondere ist es möglich, **PCE** in Kombination mit Glyzerin, Glykol, und/oder Alkanolaminen einzusetzen. Darüber hinaus ist es möglich, **PCE** in Kombination mit einem wasserabsorbierenden Mittel einzusetzen. Ausserdem ist es möglich, **PCE** in Kombination mit einem nicht-ionischen Tensid und/oder einem Gemini-Tensid einzusetzen.

Eine vorteilhafte Kombination kann auch mindestens ein Alkanolamin, ggf. mindestens ein Glykol und mindestens ein nicht-ionisches Tensid und/oder Gemini-Tensid sein.

Die Prozesshilfsmittel können optional weitere Bestandteile enthalten. Beispiele hierfür sind Lösungsmittel oder Additive, wie sie in der Betontechnologie geläufig sind, insbesondere Stabilisatoren gegen Hitze und Licht, Chromreduzierer, Entschäumer, Farbstoffe, Pigmente, Konservierungsmittel, Luftporenbildner, Schwindreduzierer, Korrosionsinhibitoren.

In einem Verfahren zur Gewinnung von Zuschlagstoffen und/oder pulverförmigem mineralischem Material aus einem Ausgangsmaterial, das gehärtetes mineralisches Bindemittel und Zuschlagstoffe umfasst, wobei das Verfahren die folgenden Schritte umfasst:
a) Behandlung des Ausgangsmaterials in einem Zertrümmerungsvorgang, insbesondere unter abrasiven Bedingungen, wobei das gehärtete mineralische Bindemittel zumindest teilweise, insbesondere im Wesentlichen vollständig, karbonatisiert und von der Oberfläche der Aggregate entfernt wird, so dass ein pulverförmiges Zertrümmerungsprodukt entsteht,
b) Abtrennen des behandelten Ausgangsmaterials bei einer vordefinierten Grenzkorngröße, um behandelte Zuschlagstoffe mit einer Korngröße von mindestens der vordefinierten Grenzkorngröße zu gewinnen und/oder um pulverförmiges mineralisches Material mit einer Korngröße unterhalb der vordefinierten Grenzkorngröße zu gewinnen, kann das eine oder die mehreren Prozesshilfsmittel ausgewählt aus der Gruppe bestehend aus Polycarboxylatethern und/oder -estern (**PCE**), Glykolen, organischen Aminen, insbesondere Alkanolaminen, Ammoniumsalzen von organischen Aminen mit Carbonsäuren, Tensiden, insbesondere nicht-ionischen Tensiden, Gemini-Tensiden, Calciumstearat, alkoxylierten Phosphonsäure- oder Phosphorsäureestern, 1,3-Propandiol, Carbonsäuren, sulphonierten Aminoalkoholen, Borsäure, Salze der Borsäure, Borax, Salze der Phosphorsäure, Glukonat, Eisensulphat, Zinnsulphat, Antimonsalzen, Alkalisalzen, Erdalkalisalzen, Ligninsulphonaten, Glyzerin, Melamin, Melaminsulphonaten, wasserabsorbierenden Mitteln in Form eines Superabsorberpolymers oder in Form eines Schichtsilikats, Antibackmitteln, Zuckern, Zuckersäuren, Zuckeralkoholen, Phosphaten, Phosphonaten, zugegeben werden.

In einem weiteren Aspekt bezieht sich die vorliegende Erfindung daher auf ein Verfahren zur Gewinnung von Zuschlagstoffen und/oder pulverförmigem mineralischem Material aus einem Ausgangsmaterial, das gehärtetes mineralisches Bindemittel und Zuschlagstoffe umfasst, wobei das Verfahren die folgenden Schritte umfasst:
a) Behandlung des Ausgangsmaterials in einem Zertrümmerungsvorgang, insbesondere unter abrasiven Bedingungen, wobei das gehärtete mineralische Bindemittel zumindest teilweise, insbesondere im Wesentlichen vollständig, karbonatisiert und von der Oberfläche der Aggregate entfernt wird, so dass ein pulverförmiges Zertrümmerungsprodukt entsteht,
b) Abtrennen des behandelten Ausgangsmaterials bei einer vordefinierten Grenzkorngröße, um behandelte Zuschlagstoffe mit einer Korngröße von mindestens der vordefinierten Grenzkorngröße zu gewinnen und/oder um pulverförmiges mineralisches Material mit einer Korngröße unterhalb der vordefinierten Grenzkorngröße zu gewinnen, dadurch gekennzeichnet, dass mindestens ein Prozesshilfsmittel ausgewählt aus der Gruppe bestehend aus Polycarboxylatethern und/oder -estern (**PCE**), Glykolen, organischen Aminen, insbesondere Alkanolaminen, Ammoniumsalzen von organischen Aminen mit Carbonsäuren, Tensiden, insbesondere nicht-ionischen Tensiden, Gemini-Tensiden, Calciumstearat, alkoxylierten Phosphonsäure- oder Phosphorsäureestern, 1,3-Propandiol, Carbonsäuren, sulphonierten Aminoalkoholen, Borsäure, Salze der Borsäure, Borax, Salze der Phosphorsäure, Glukonat, Eisensulphat, Zinnsulphat, Antimonsalzen, Alkalisalzen, Erdalkalisalzen, Ligninsulphonaten, Glyzerin, Melamin, Melaminsulphonaten, wasserabsorbierenden Mitteln in Form eines Superabsorberpolymers oder in Form eines Schichtsilikats, Antibackmitteln, Zuckern, Zuckersäuren, Zuckeralkoholen, Phosphaten, Phosphonaten,
   zugegeben wird.

Die Reihenfolge und der Zeitpunkt der Zugabe des mindestens einen Prozesshilfsmittels ist dabei nicht besonders beschränkt. Es ist insbesondere möglich, das eine oder die mehreren Prozesshilfsmittel zu dem Ausgangsmaterial zuzugeben, bevorzugt vor dem Zertrümmerungsvorgang a). Es ist aber auch möglich, das eine oder die mehreren Prozesshilfsmittel während des Verfahrens, z.B. während des Zertrümmerungsvorganges a) und/oder während des Abtrennschrittes b), zuzugeben. Es ist weiterhin möglich, das eine oder die mehreren Prozesshilfsmittel im Anschluss an den Abtrennschritt b) zuzugeben, ggf. nur zu einer Teilfraktion der erhaltenen Zuschlagstoffen und/oder pulverförmigen mineralischen Materialien. Letzteres kann insbesondere dann vorteilhaft sein, wenn das oder die Prozesshilfsmittel zugegeben werden, um das Verhalten der erhaltenen Zuschlagstoffe und/oder pulverförmigen mineralischen Materialien bei Verwendung zu Herstellung von hydraulischen Zusammensetzungen, insbesondere zementgebundenen Baustoffen zu beeinflussen.

Das eine oder die mehreren Prozesshilfsmittel können in Substanz oder als Lösungen oder als Dispersionen eingesetzt werden. Es ist im Rahmen der vorliegenden Erfindung insbesondere möglich, das eine oder die mehreren Prozesshilfsmittel in Pulverform einzusetzen. Dies kann vor allem dann vorteilhaft sein, wenn das eine oder die mehreren Prozesshilfsmittel mit dem Ausgangsmaterial, insbesondere Abbruchmaterial und/oder Bauschutt, vermischt wird. Es ist aber auch möglich, das eine oder die mehreren Prozesshilfsmittel in wässriger Lösung oder Dispersion einzusetzen. Dies kann insbesondere dann vorteilhaft sein, wenn das eine oder die mehreren Prozesshilfsmittel während des Zertrümmerungsschrittes zugegeben werden.

In einem erfindungsgemässen Verfahren ist es demnach möglich, dass ein Prozesshilfsmittel zugegeben wird. In einem erfindungsgemässen Verfahren ist es aber auch möglich, und in vielen Fällen bevorzugt, dass eine Mischung aus zwei oder mehr Prozesshilfsmitteln zugegeben wird.

Wird eine Mischung aus zwei oder mehr Prozesshilfsmitteln zugegeben, so kann diese Mischung in Form einer Vormischung, insbesondere einer wässrigen Lösung oder Dispersion, vorliegen und zugegeben werden. Es ist aber auch möglich, dass zwei oder mehr Prozesshilfsmittel getrennt voneinander zugegeben werden. Dies ist insbesondere dann von Vorteil, wenn die unterschiedlichen Prozesshilfsmittel nicht in Form einer stabilen Mischung vorliegen können, z.B. da sie chemisch reagieren würden. Es ist auch möglich, unterschiedliche Prozesshilfsmittel zu unterschiedlichen Verfahrensschritten zuzugeben.

Mittel zur Zugabe und Einmischung sind dem Fachmann an sich bekannt.

Ein weiterer Aspekt der vorliegenden Erfindung betrifft die durch das Verfahren der vorliegenden Erfindung erhältlichen Zuschlagstoffe und/oder pulverförmigen mineralischen Materialien. Diese Zuschlagstoffe und/oder pulverförmigen mineralischen Materialien liegen insbesondere in Partikelform vor. Diese Zuschlagstoffe und/oder pulverförmigen mineralischen Materialien unterscheiden sich von frischen oder sauberen Gesteinskörnungen insbesondere dadurch, dass sie eine minimale Menge an gehärtetem Restbindemittel auf der Oberfläche tragen können sowie die eingesetzten Prozesshilfsmittel in freier, gebundener, umgesetzter oder adsorbierter Form enthalten. Frische oder saubere Gesteinskörnungen sind im vorliegenden Zusammenhang Gesteinskörnungen, die insbesondere nie mit mineralischem Bindemittel, insbesondere mit zementartigem Material, in Berührung gekommen sind.

Typischerweise umfassen die Zuschlagstoffe und/oder pulverförmigen mineralischen Materialien gehärtetes mineralisches Bindemittel in einer Menge von 0,0001 - 25 Gew.-%, vorzugsweise 0,01 - 10 Gew.-%, insbesondere 0,01 - 1 Gew.-%, bezogen auf das Gesamtgewicht der Gesteinskörnungen.

Insbesondere beträgt eine Porosität, gemessen nach der Norm EN 1097-6 der Zuschlagstoffe und/oder pulverförmigen mineralischen Materialien ≤ 10 Vol.-%, insbesondere ≤ 5 Vol.-%, insbesondere ≤ 2 Vol.-%. Typischerweise beträgt die Porosität ≥ 0,1 Vol.-%, insbesondere ≥ 1 Vol.-%. Vorzugsweise beträgt die Porosität 1,5 2 Vol.-%.

Vorzugsweise haben die Zuschlagstoffe eine Partikelgröße von mindestens 125 µm oder mindestens 250 µm.

Insbesondere hat das pulverförmige mineralische Material eine Partikelgröße unter 250 µm, vorzugsweise unter 125 µm. Eine Feinheit des pulverförmigen mineralischen Materials liegt insbesondere im Bereich von 0,5 - 1000 m2/g, vorzugsweise 0,5 - 500 m2/g, insbesondere 0,5 - 100 m2/g. Die Feinheit bezieht sich auf die aus der Stickstoffsorption (BET) berechnete Oberfläche.

Insbesondere umfasst oder besteht das pulverförmige mineralische Material aus kohlensäurehaltigen Hydraten des zementgebundenen gehärteten Bindemittels, gegebenenfalls mit Resthydraten und/oder Oxiden, z.B. Quarz. Wahlweise können auch Aluminatprodukte und/oder Sulfate vorhanden sein.

Insbesondere hat das pulverförmige mineralische Material die gleiche Oxidzusammensetzung wie das ausgehärtete Bindemittel und wie Fraktionen von Zuschlagstoffen mit einer Korngröße unterhalb der Grenzkorngröße, z.B. unter 250 µm oder unter 125 µm.

Solche pulverförmigen mineralischen Werkstoffe mit Korngrößen im Nano- bis Mikrometerbereich und/oder einer hohen spezifischen Oberfläche sind besonders vorteilhaft, wenn sie als Füllstoff und/oder ergänzendes zementartiges Material und/oder Rohmaterial für die Zementherstellung und/oder die Ascheverbesserungstechnologie verwendet werden. Die Feinheit des pulverförmigen Baustoffes kann insbesondere die Geschwindigkeit der frühen Hydratation hydraulischer Zusammensetzungen, insbesondere zementgebundener Baustoffe erhöhen. Außerdem müssen solche Materialien für die Verwendung in Bindemittelzusammensetzungen nicht gemahlen werden. So können die gewonnenen pulverförmigen mineralischen Materialien z.B. leicht und ohne zusätzlichen Aufwand mit Zement gemischt werden.

Die nach dem Verfahren der Erfindung erhältlichen Gesteinskörnungen und/oder die pulverförmigen mineralischen Materialien können vorteilhaft zur Herstellung von Bindemittelzusammensetzungen, insbesondere hydraulisch abbindenden Zusammensetzungen wie zementgebundenen Baustoffen und ganz besonders von Mörtel- und/oder Betonzusammensetzungen, verwendet werden.

Das nach dem Verfahren der vorliegenden Erfindung erhältliche pulverförmige mineralische Material kann vorzugsweise als Füllstoff und/oder ergänzendes zementartiges Material, insbesondere zur Herstellung hydraulisch abbindender Massen, insbesondere Mörtel- und/oder Betonmassen, verwendet werden.

In einem weiteren Aspekt bezieht sich die vorliegende Erfindung daher auf die Verwendung von Zuschlagstoffen und/oder pulverförmigem mineralischem Material erhalten in einem Verfahren wie oben beschreiben zur Herstellung von hydraulischen Zusammensetzungen, bevorzugt zementgebundenen Baustoffen, insbesondere Mörtel oder Beton

Ein weiterer Aspekt der vorliegenden Erfindung bezieht sich auf ein Verfahren zur Herstellung hydraulisch abbindender Zusammensetzungen, insbesondere Mörtel- oder Betonzusammensetzungen, umfassend die Schritte (i) Gewinnung von Zuschlagstoffen und/oder pulverförmigem mineralischem Material nach dem oben definierten Verfahren unter Verwendung von Prozesshilfsmitteln und (ii) Mischen der gewonnenen Zuschlagstoffen und/oder pulverförmigen mineralischen Materialien mit mineralischem Bindemittel, insbesondere hydraulischem Bindemittel, und gegebenenfalls weiteren Zuschlagstoffen und/oder Wasser.

Wenn die Zugabe von Wasser bei den oben genannten Verfahren unterbleibt, ist es beispielsweise möglich, Trockenmörtel oder Betonzusammensetzungen herzustellen.

Bei zusätzlicher Zugabe von Wasser können verarbeitungsfähige hydraulisch abbindende Zusammensetzungen hergestellt werden, z.B. Mörtel- oder Betonzusammensetzungen. Das Verhältnis von Wasser zu Bindemittel in den Zusammensetzungen kann im Bereich von 0.2 - 0.8, insbesondere 0.3 - 0.6, vorzugsweise 0.3 - 0.5, gewählt werden.

In einem letzten Aspekt bezieht sich die vorliegende Erfindung daher auf einen Mörtel oder Beton, enthaltend mindestens einen Zuschlagstoff und/oder pulverförmiges mineralisches Material erhalten in einem Verfahren wie oben beschrieben.

## Patentansprüche

1. Verwendung von Prozesshilfsmitteln in einem Verfahren zur Gewinnung von Zuschlagstoffen und/oder pulverförmigem mineralischem Material aus einem Ausgangsmaterial, das gehärtetes mineralisches Bindemittel und Zuschlagstoffe umfasst, wobei das Verfahren die folgenden Schritte umfasst:
a) Behandlung des Ausgangsmaterials in einem Zertrümmerungsvorgang, insbesondere unter abrasiven Bedingungen, wobei das gehärtete mineralische Bindemittel zumindest teilweise, insbesondere im Wesentlichen vollständig, karbonatisiert und von der Oberfläche der Aggregate entfernt wird, so dass ein pulverförmiges Zertrümmerungsprodukt entsteht,
b) Abtrennen des behandelten Ausgangsmaterials bei einer vordefinierten Grenzkorngröße, um behandelte Zuschlagstoffe mit einer Korngröße von mindestens der vordefinierten Grenzkorngröße zu gewinnen und/oder um pulverförmiges mineralisches Material mit einer Korngröße unterhalb der vordefinierten Grenzkorngröße zu gewinnen.

2. Verwendung von Prozesshilfsmitteln gemäss Anspruch 1, **dadurch gekennzeichnet, dass** die Prozesshilfsmittel ausgewählt sind aus der Gruppe bestehend aus Polycarboxylatethern und/oder -estern (**PCE**), Glykolen, organischen Aminen, insbesondere Alkanolaminen, Ammoniumsalzen von organischen Aminen mit Carbonsäuren, Tensiden, insbesondere nicht-ionischen Tensiden, Gemini-Tensiden, Calciumstearat, alkoxylierten Phosphonsäure- oder Phosphorsäureestern, 1,3-Propandiol, Carbonsäuren, sulphonierten Aminoalkoholen, Borsäure, Salze der Borsäure, Borax, Salze der Phosphorsäure, Glukonat, Eisensulphat, Zinnsulphat, Antimonsalzen, Alkalisalzen, Erdalkalisalzen, Ligninsulphonaten, Glyzerin, Melamin, Melaminsulphonaten, wasserabsorbierenden Mitteln in Form eines Superabsorberpolymers oder in Form eines Schichtsilikats, Antibackmitteln, Zuckern, Zuckersäuren, Zuckeralkoholen, Phosphaten, Phosphonaten, sowie deren Mischungen.

3. Verwendung von Prozesshilfsmitteln gemäss Anspruch 1, **dadurch gekennzeichnet, dass** das Prozesshilfsmittel ein oder mehrere Alkanolamine umfasst oder im Wesentlichen daraus besteht, wobei Alkanolamine ausgewählt sind aus der Gruppe bestehend aus Monoethanolamin, Diethanolamin, Triethanolamin (TEA), Diethanolisopropanolamin (DEIPA), Ethanoldiisopropanolamin (EDIPA), Isopropanolamin, Diisopropanolamin, Triisopropanolamin (TIPA), N-Methyldiisopropanolamin (MDIPA), N-Methyldiethanolamin (MDEA), Tetrahydroxyethylethylendiamin (THEED) und Tetrahydroxyisopropylethylendiamin (THIPD), sowie Salzen dieser Alkanolamine.

4. Verwendung von Prozesshilfsmitteln gemäss Anspruch 1, **dadurch gekennzeichnet, dass** das Prozesshilfsmittel Glykole und/oder Glyzerin umfasst oder im Wesentlichen daraus besteht, wobei Glykole ausgewählt sind aus der Gruppe bestehend aus Monoethylenglykol, Diethylenglykol, Triethylenglykol, Tetraethylenglykol, Pentaethylenglykol, Polyethylenglykol, insbesondere mit 6 oder mehr Ethylen-Einheiten, z.B. PEG 200, Neopentylglykol, Hexylenglykol, Propylenglykol, Dipropylenglykol sowie Polypropylenglykol.

5. Verwendung von Prozesshilfsmitteln gemäss Anspruch 1, **dadurch gekennzeichnet, dass** das Prozesshilfsmittel mindestens einen Polycarboxylatether und/oder Polycarboxylatester (**PCE**) umfasst oder im Wesentlichen daraus besteht.

6. Verwendung von Prozesshilfsmitteln gemäss wenigstens einem der Ansprüche 1 und 5, wobei **PCE** Copolymere sind, welche umfassen
(i) Wiederholungseinheiten **A** der allgemeinen Struktur (I), 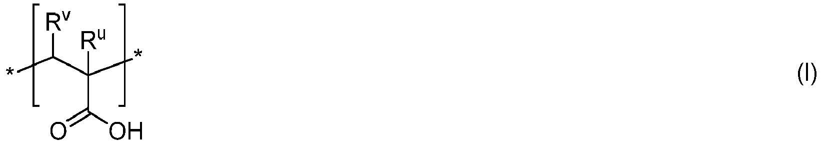 und
(ii) Wiederholungseinheiten **B** der allgemeinen Struktur (II), 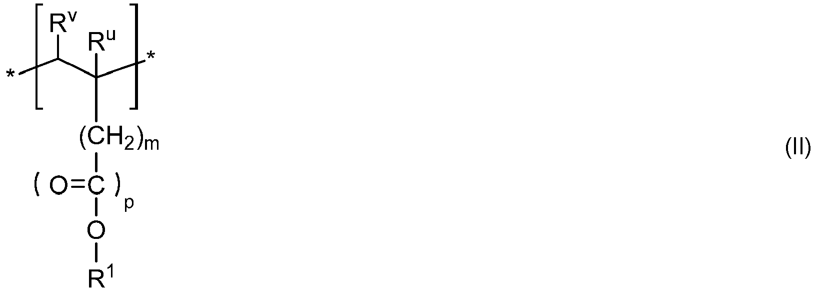 wobei
jedes R^{u} unabhängig voneinander Wasserstoff oder eine Methylgruppe darstellt,
jedes R^{v} unabhängig voneinander Wasserstoff oder COOM darstellt, wobei M unabhängig voneinander H, ein Alkalimetall, oder ein Erdalkalimetall ist,
m = 0, 1, 2 oder 3 ist,
p = 0 oder 1 ist,
jedes R¹ unabhängig voneinander -(CH₂)_{z}-[YO]ₙ-R⁴ darstellt, wobei Y ein C2- bis C4-Alkylen und R⁴ ein H, C1- bis C20-Alkyl, -Cyclohexyl, -Alkylaryl, oder ein -N(-Rⁱ)ⱼ-[(CH₂)_{z}-PO₃M]₃₋ⱼ darstellt, z = 0, 1, 2, 3 oder 4, ebvorzugt 0 oder 4 ist, n = 2 - 350 bevorzugt 10 - 250, mehr bevorzugt 30 - 200, besonders bevorzugt 35 - 200, insbesondere 40 - 110 ist, j = 0, 1 oder 2 ist, Ri ein Wasserstoffatom oder eine Alkylgruppe mit 1 - 4 Kohlenstoffatomen darstellt und M ein Wasserstoffatom, ein Alkalimetall, ein Erdalkalimetall oder ein Ammoniumion darstellt,
und wobei die Wiederholungseinheiten **A** und **B** im **PCE** ein molares Verhältnis von **A** : **B** im Bereich von 10 : 90 - 90 :10, bevorzugt 20 : 80 - 80 : 20, mehr bevorzugt 30 : 70 - 80 : 20, insbesondere 35 : 65 - 75 : 25 aufweisen.

7. Verwendung von Prozesshilfsmitteln gemäss wenigstens einem der Ansprüche 5 und 6, **dadurch gekennzeichnet dass** zusätzlich zu dem mindestens einen **PCE** noch ein oder mehrere weitere Prozesshilfsmittel verwendet werden, wobei das eine oder die mehreren weiteren Prozesshilfsmittel ausgewählt sind aus der Gruppe bestehend aus Glykolen, Alkanolaminen, nicht-ionischen Tensiden, Ligninsulphonaten, Glyzerin, wasserabsorbierenden Mitteln in Form eines Superabsorberpolymers oder in Form eines Schichtsilikats, und Antibackmitteln.

8. Verwendung von Prozesshilfsmitteln gemäss Anspruch 1, **dadurch gekennzeichnet, dass** das Prozesshilfsmittel Natriumligninsulphonat, Magnesiumligninsulphonat und/oder Calciumligninsulphonat umfasst oder im Wesentlichen daraus besteht.

9. Verwendung von Prozesshilfsmitteln gemäss Anspruch 1, **dadurch gekennzeichnet, dass** das Prozesshilfsmittel ein wasserabsorbierendes Mittel umfasst oder im Wesentlichen daraus besteht, wobei das wasserabsorbierende Mittel ein Superabsorberpolymer oder Schichtsilikat ist.

10. Verwendung von Prozesshilfsmitteln gemäss Anspruch 1, **dadurch gekennzeichnet, dass** das Prozesshilfsmittel ein Tensid umfasst oder im Wesentlichen daraus besteht, wobei das Tensid bevorzugt ein nicht-ionisches Tensid ist, ausgewählt aus der Gruppe bestehend aus Fettsäurealkoxylaten, alkoxylierten Alkoholen, insbesondere Fettsäurealkoholalkoxylaten sowie Alkoxylaten von Glyzerin und Pentaerythritol, Alkylphenolalkoxylaten, alkoxylierten Polykondensaten, Fettsäureamidalkoxylaten, Ester von Fettsäuren, insbesondere Fettsäureester von Methanol, Sorbitan, Glycerol oder Pentaerythritol, alkoxylierten Alkylaminen mit einem Alkylrest bestehend aus 6-20 Kohlenstoffatomen, Alkylglycosiden, Alkylglucamiden, sowie alkoxylierten Sorbitanen, Laurylethersulphonaten, Naphthalinsulphonaten, hydrophobisierten Stärken, hydrophobisierten Cellulosen oder Siloxan-basierten nicht-ionischenTensiden.

11. Verfahren zur Gewinnung von Zuschlagstoffen und/oder pulverförmigem mineralischem Material aus einem Ausgangsmaterial, das gehärtetes mineralisches Bindemittel und Zuschlagstoffe umfasst, wobei das Verfahren die folgenden Schritte umfasst:
a) Behandlung des Ausgangsmaterials in einem Zertrümmerungsvorgang, insbesondere unter abrasiven Bedingungen, wobei das gehärtete mineralische Bindemittel zumindest teilweise, insbesondere im Wesentlichen vollständig, karbonatisiert und von der Oberfläche der Aggregate entfernt wird, so dass ein pulverförmiges Zertrümmerungsprodukt entsteht,
b) Abtrennen des behandelten Ausgangsmaterials bei einer vordefinierten Grenzkorngröße, um behandelte Zuschlagstoffe mit einer Korngröße von mindestens der vordefinierten Grenzkorngröße zu gewinnen und/oder um pulverförmiges mineralisches Material mit einer Korngröße unterhalb der vordefinierten Grenzkorngröße zu gewinnen,
**dadurch gekennzeichnet, dass** mindestens ein Prozesshilfsmittel ausgewählt aus der Gruppe bestehend aus Polycarboxylatethern und/oder -estern (**PCE**), Glykolen, organischen Aminen, insbesondere Alkanolaminen, Ammoniumsalzen von organischen Aminen mit Carbonsäuren, Tensiden, insbesondere nicht-ionischen Tensiden, Gemini-Tensiden, Calciumstearat, alkoxylierten Phosphonsäure- oder Phosphorsäureestern, 1,3-Propandiol, Carbonsäuren, sulphonierten Aminoalkoholen, Borsäure, Salze der Borsäure, Borax, Salze der Phosphorsäure, Glukonat, Eisensulphat, Zinnsulphat, Antimonsalzen, Alkalisalzen, Erdalkalisalzen, Ligninsulphonaten, Glyzerin, Melamin, Melaminsulphonaten, wasserabsorbierenden Mitteln in Form eines Superabsorberpolymers oder in Form eines Schichtsilikats, Antibackmitteln, Zuckern, Zuckersäuren, Zuckeralkoholen, Phosphaten, Phosphonaten, zugegeben wird.

12. Verfahren gemäss Anspruch 11, **dadurch gekennzeichnet, dass** das mindestens eine Prozesshilfsmittel zu dem Ausgangmaterial zugegeben wird, bevorzugt vor dem Zertrümmerungsvorgang a).

13. Verfahren gemäss Anspruch 101, **dadurch gekennzeichnet, dass** das mindestens eine Prozesshilfsmittel während des Zertrümmerungsvorganges a) und/oder während des Abtrennens b) zugegeben wird.

14. Verfahren gemäss wenigstens einem der Ansprüche 11-13, **dadurch gekennzeichnet, dass** eine Mischung aus zwei oder mehr Prozesshilfsmitteln zugegeben wird.

15. Verfahren gemäss Anspruch 14, **dadurch gekennzeichnet, dass** die Mischung aus zwei oder mehr Prozesshilfsmittel in Form einer Vormischung, insbesondere einer wässrigen Lösung oder Dispersion, zugegeben wird.

16. Verfahren gemäss wenigstens einem der Ansprüche 11-14, **dadurch gekennzeichnet, dass** zwei oder mehr Prozesshilfsmittel getrennt voneinander zugegeben werden.

17. Verwendung von Zuschlagstoffen und/oder pulverförmigem mineralischem Material erhalten in einem Verfahren gemäss wenigstens einem der Ansprüche 11-16 zur Herstellung von hydraulischen Zusammensetzungen, bevorzugt zementgebundenen Baustoffen, insbesondere Mörtel oder Beton.

18. Mörtel oder Beton, enthaltend mindestens einen Zuschlagstoff und/oder pulverförmiges mineralisches Material erhalten in einem Verfahren gemäss wenigstens einem der Ansprüche 11-16.
